# EUROPEAN PATENT APPLICATION

(11) **EP 4 780 084 A1**
(43) Date of publication of application: **22.07.2026**
(21) Application number: 23951978.8
(22) Date of filing: 18.10.2023
(51) Int. Cl.: H04W 52/02

(54) **INFORMATION TRANSMISSION METHOD AND APPARATUS, DEVICE, MEDIUM, AND PROGRAM PRODUCT**

(30) Priority: 11.09.2023 WO PCT/CN2023/118057
(71) Applicant: GUANGDONG OPPO MOBILE TELECOMMUNICATIONS CORP., LTD., Dongguan, Guangdong 523860 (CN)
(72) Inventor: XU, Weijie, Dongguan, Guangdong 523860 (CN)
(74) Representative: Penza, Giancarlo
(86) International application number: PCT/CN2023/125274
(87) International publication number: WO 2025/055052

(57) **Abstract**

The present application relates to the field of energy conservation, and discloses an information transmission method and apparatus, a device, a medium, and a program product. The method is executed by an electronic device, the electronic device comprises a first receiver and a main transceiver, the working energy consumption of the first receiver is less than that of the main transceiver, and the method comprises: receiving first information by means of the first receiver, wherein the first information is used for communication between the electronic device and a wireless network. According to the method, the first information is received by means of the first receiver, so that the main transceiver having high power consumption is prevented from receiving the first information, and after being awakened, the main transceiver does not need to read the first information from other frames, helping the electronic device to quickly establish a connection with the wireless network.

## Description

### CROSS-REFERENCE TO RELATED APPLICATION(S)

The present disclosure claims priority to the PCT Application No. PCT/CN2023/118057, filed on September 11, 2023, entitled "RECEIVER WAKE-UP METHOD, APPARATUS, DEVICE, MEDIUM, AND PROGRAM PRODUCT", the entire contents of which are incorporated herein by reference.

### TECHNICAL FIELD

The present disclosure relates to the field of energy conservation, and in particular, to an information transmission method, apparatus, device, medium, and program product.

### BACKGROUND

With the continuous evolution of wireless communication technologies, Internet of Things (IoT) technologies have been applied to all aspects of production and daily life.

Different scenarios impose different requirements on the power consumption and size of IoT devices, and electronic devices applied in the IoT often face the problem of excessively high power consumption during communication.

### SUMMARY

The present disclosure provides an information transmission method, apparatus, device, medium, and program product, where the technical solution at least includes the following.

According to one aspect of the embodiments of the present disclosure, there is provided an information transmission method, where the method is executed by an electronic device, the electronic device includes a first receiver and a main transceiver, and an operating power consumption of the first receiver is less than an operating power consumption of the main transceiver, the method includes:
receiving first information via the first receiver;
wherein the first information is used for communication between the electronic device and a wireless network.

According to another aspect of the embodiments of the present disclosure, there is provided an information transmission method, where the method is executed by a network device, the method includes:
transmitting first information to a first receiver;
wherein an electronic device includes the first receiver and a main transceiver, an operating power consumption of the first receiver is less than an operating power consumption of the main transceiver, and the first information is used for communication between the electronic device and a wireless network.

According to another aspect of the embodiments of the present disclosure, there is provided an electronic device, where the apparatus includes a first receiver and a main transceiver, and an operating power consumption of the first receiver is less than an operating power consumption of the main transceiver, the apparatus includes:
a first receiving module, configured to receive first information via the first receiver;
wherein the first information is used for communication between the electronic device and a wireless network.

According to another aspect of the embodiments of the present disclosure, there is provided a network device, which includes:
a first transmitting module, configured to transmit first information to a first receiver;
wherein an electronic device includes the first receiver and a main transceiver, an operating power consumption of the first receiver is less than an operating power consumption of the main transceiver, and the first information is used for communication between the electronic device and a wireless network.

According to another aspect of the embodiments of the present disclosure, there is provided an electronic device, the electronic device includes:
a processor;
a transceiver connected to the processor;
a memory configured to store executable instructions of the processor;
wherein the processor is configured to load and execute the executable instructions to implement the information transmission method according to the foregoing aspects.

According to another aspect of the embodiments of the present disclosure, there is provided a network device, the network device includes:
a processor;
a transceiver connected to the processor;
a memory configured to store executable instructions of the processor;
wherein the processor is configured to load and execute the executable instructions to implement the information transmission method according to the foregoing aspects.

According to another aspect of the embodiments of the present disclosure, there is provided a chip, the chip includes a programmable logic circuit and/or program instructions, and the chip is configured to implement the information transmission method according to the foregoing aspects when running.

According to another aspect of the embodiments of the present disclosure, there is provided a computer-readable storage medium, where at least one segment of program is stored in the computer-readable storage medium, and the at least one segment of program is loaded and executed by a processor to implement the information transmission method according to the foregoing aspects.

According to another aspect of the embodiments of the present disclosure, there is provided a computer program product or a computer program, the computer program product or the computer program includes computer instructions, the computer instructions are stored in a computer-readable storage medium, a processor is configured to acquire the computer instructions from the computer-readable storage medium, and execute the computer instructions to implement the information transmission method according to the foregoing aspects.

The technical solutions provided by the embodiments of the present disclosure may include the following beneficial effects:
The first information is received via the first receiver, which avoids the high-power-consumption main transceiver from receiving the first information, and the main transceiver, after being woken up, does not need to read the first information from other frames, helping the electronic device quickly establish a connection with the wireless network.

### BRIEF DESCRIPTION OF THE DRAWINGS

To more clearly illustrate the technical solutions in the embodiments of the present disclosure, the accompanying drawings required for describing the embodiments will be briefly introduced below. Obviously, the accompanying drawings in the following description are merely some embodiments of the present disclosure. Those of ordinary skill in the art can obtain other accompanying drawings based on these drawings without exerting creative efforts.
FIG. 1 is a schematic diagram of a zero-power-consumption communication system according to the related art;
FIG. 2 is a schematic diagram of radio frequency power harvesting according to the related art;
FIG. 3 is a schematic diagram of a backscatter communication process according to the related art;
FIG. 4 is a schematic diagram of resistive load modulation according to the related art;
FIG. 5 is a schematic diagram of a coding scheme according to the related art;
FIG. 6 is a schematic diagram of a communication process of a zero-power-consumption IoT device according to an exemplary embodiment of the present disclosure;
FIG. 7 is a schematic diagram of a receiver system according to the related art;
FIG. 8 is a flowchart of an information transmission method according to an exemplary embodiment of the present disclosure;
FIG. 9 is a schematic diagram of time-domain configuration of physical random access channel resources according to an exemplary embodiment of the present disclosure;
FIG. 10 is a flowchart of an information transmission method according to an exemplary embodiment of the present disclosure;
FIG. 11 is a flowchart of an information transmission method according to an exemplary embodiment of the present disclosure;
FIG. 12 is a flowchart of an information transmission method according to an exemplary embodiment of the present disclosure;
FIG. 13 is a block diagram of an electronic device according to an exemplary embodiment of the present disclosure;
FIG. 14 is a block diagram of a network device according to an exemplary embodiment of the present disclosure;
FIG. 15 is a schematic structural diagram of an electronic device according to an exemplary embodiment of the present disclosure;
FIG. 16 is a schematic structural diagram of a network device according to an exemplary embodiment of the present disclosure.

### DETAILED DESCRIPTION

To make the objectives, technical solutions, and advantages of the present disclosure clearer, the following further describes the implementations of the present disclosure in detail with reference to the accompanying drawings. Exemplary embodiments will be described in detail herein, with examples thereof illustrated in the accompanying drawings. Where the following description refers to the drawings, the same numbers in different drawings refer to the same or similar elements unless otherwise indicated. The implementations described in the following exemplary embodiments do not represent all implementations consistent with the present disclosure. Instead, they are merely examples of apparatuses and methods consistent with some aspects of the present disclosure as detailed in the appended claims.

The terms used in this disclosure are for the purpose of describing particular embodiments only and are not intended to limit the disclosure. As used in this disclosure and the appended claims, the singular forms "a", "the", and "said" are intended to include the plural forms as well, unless the context clearly indicates otherwise. It should also be understood that the term "and/or" as used herein refers to and encompasses any or all possible combinations of one or more of the associated listed items.

It should be understood that although the terms first, second, third, etc. may be used in this disclosure to describe various information, such information should not be limited to these terms. These terms are only used to distinguish the same type of information from each other. For example, without departing from the scope of this disclosure, first information may also be referred to as second information, and similarly, second information may also be referred to as first information. Depending on the context, the word "if" as used herein may be interpreted as "when", "upon", or "in response to determining".

The technical solutions described in some embodiments of the present disclosure may be applicable to various communication systems, such as: Global System of Mobile communication (GSM) system, Code Division Multiple Access (CDMA) system, Wideband Code Division Multiple Access (WCDMA) system, General Packet Radio Service (GPRS), Long Term Evolution (LTE) system, Advanced long term evolution (LTE-A) system, New Radio (NR) system, an evolution system of the NR system, LTE-based access to unlicensed spectrum (LTE-U) system, NR-based access to unlicensed spectrum (NR-U) system, Non-Terrestrial Networks (NTN) system, Universal Mobile Telecommunication System (UMTS), Wireless Local Area Networks (WLAN), Wireless Fidelity (WiFi), 5th-Generation (5G) system, cellular IoT system, cellular passive IoT system, and may also be applicable to an evolution system subsequent to the 5G NR system, as well as 6G and subsequent evolution systems.

It should be understood that in some embodiments of the present disclosure, "5G" may also be referred to as "5G NR" or "NR".

It should be understood that in the description of the embodiments of the present disclosure, the term "correspond" may indicate a direct corresponding or indirect corresponding relationship between two parties, may also indicate an association relationship between two parties, and may also indicate an indication and indicated relationship, a configuration and configured relationship, etc.

In the embodiments of the present disclosure, "predefined" may be implemented by pre-saving corresponding codes, tables, or other means that can be used to indicate relevant information in a device (for example, including a terminal device and a network device), and the present disclosure does not limit its specific implementation manner. For example, predefined may refer to defined in a protocol.

In the embodiments of the present disclosure, "protocol" may refer to a standard protocol in the field of communications, for example, may include an LTE protocol, an NR protocol, and a related protocol applied to a future communication system, which is not limited in the present disclosure.

The electronic device involved in the embodiments of the present disclosure may be an active device, where an active device refers to a device having its own power supply and being capable of actively generating and transmitting signals, such as a mobile phone, a computer, a smart watch, a smart band, etc..

The electronic device may also be a passive device, where a passive device refers to a device that does not require a power supply or can work by receiving energy from other devices, and may be referred to as a zero-power-consumption device, a zero-power-consumption terminal, a low-power-consumption device, a low-power-consumption terminal, etc..

The electronic device may also be a device that obtains energy from the environment, and may be referred to as an ambient power Internet of Things device.

The electronic device may also be a device deployed at a fixed location, and may be referred to as a zero-power-consumption station, a low-power-consumption station, etc.

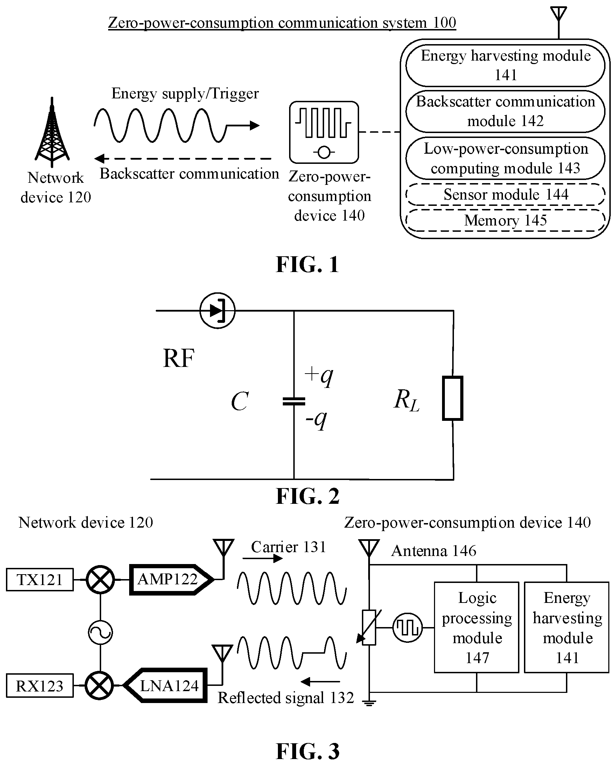

FIG. 1 is a schematic diagram of a zero-power-consumption communication system 100 according to the related art, where the zero-power-consumption communication system 100 includes a network device 120 and a zero-power-consumption device 140.

The network device 120 is configured to transmit a wireless energy supply signal and a downlink communication signal to the zero-power-consumption device 140, and receive a backscatter signal from the zero-power-consumption device 140. The zero-power-consumption device 140 is also referred to as an Ambient power enabled Internet of Things (Ambient IoT) device, and includes an energy harvesting module 141, a backscatter communication module 142, and a low-power-consumption computing module 143. The energy harvesting module 141 can harvest energy carried by radio waves (wireless signals) in space, which is used to drive the low-power-consumption computing module 143 of the zero-power-consumption device 140 and implement backscatter communication. After obtaining energy, the zero-power-consumption device 140 can receive control signaling from the network device 120, and transmit data to the network device 120 in a backscatter manner according to the control signaling. The transmitted data may be data stored by the zero-power-consumption device 140 itself (such as an identity identifier or pre-written information, such as the production date, brand, manufacturer of a product, etc.).

The zero-power-consumption device 140 may further include a sensor module 144 and a memory 145. The sensor module 144 may include various types of sensors, and the zero-power-consumption device 140 may report data collected by the various types of sensors based on a zero-power-consumption mechanism. The memory 145 is configured to store some basic information (such as an item identifier, etc.) or obtain sensing data such as ambient temperature and ambient humidity.

The zero-power-consumption device 140 does not need a battery itself, and uses the low-power-consumption computing module 143 to implement simple operations such as signal demodulation, decoding or encoding, and modulation. Therefore, the zero-power-consumption module only requires an extremely simple hardware design, making the zero-power-consumption device 140 low in cost and small in size.

The network device 120 includes but is not limited to: a cellular network device, such as a 5G/6G network device, a base station device; a WiFi/WLAN network device, such as an Access Point (AP), a router, a mobile access point, etc., where the mobile access point is, for example, a mobile phone.

The zero-power-consumption device 140 includes but is not limited to: a handheld device, a wearable device, a vehicle-mounted device, an IoT device, etc. The zero-power-consumption device 140 may be at least one of a mobile phone, a tablet computer, an e-book reader, a laptop computer, a desktop computer, a television, a game console, an Augmented Reality (AR) terminal, a Virtual Reality (VR) terminal, a Mixed Reality (MR) terminal, a wearable device, a handle, an electronic tag, a controller, etc.

Next, key technologies of zero-power-consumption communication are introduced:

### Radio Frequency Power Harvesting;

FIG. 2 is a schematic diagram of radio frequency power harvesting according to the related art. Radio frequency power harvesting is based on the principle of electromagnetic induction, which uses a Radio Frequency (RF) module to connect with a capacitor C and a load resistor RL that are kept in parallel through electromagnetic induction, so as to harvest energy of electromagnetic waves in space and obtain energy required to drive the zero-power-consumption device to work, such as driving a low-power-consumption demodulation module, a modulation module, a sensor, memory reading, etc. Therefore, the zero-power-consumption device does not need a traditional battery.

### Back Scattering;

FIG. 3 is a schematic diagram of a backscatter communication process according to the related art. The zero-power-consumption device 140 receives a wireless signal carrier 131 transmitted by a Transmit (TX) module 121 of the network device 120 by using an AMPlifier (AMP) 122, modulates the wireless signal carrier 131, uses a logic processing module 147 to load information to be transmitted, and uses an energy harvesting module 141 to harvest radio frequency energy. The zero-power-consumption device 140 radiates a modulated reflected signal 132 by using an antenna 146, and this information transmission process is referred to as backscatter communication. A Receive (RX) module 123 of the network device 120 receives the modulated reflected signal 132 by using a Low Noise Amplifier (LNA) 124. Backscatter is closely related to load modulation. Load modulation adjusts and controls circuit parameters of an oscillation loop of the zero-power-consumption device 140 according to the beat of a data stream, so that parameters such as the impedance of an electronic tag change accordingly, thereby completing the modulation process.

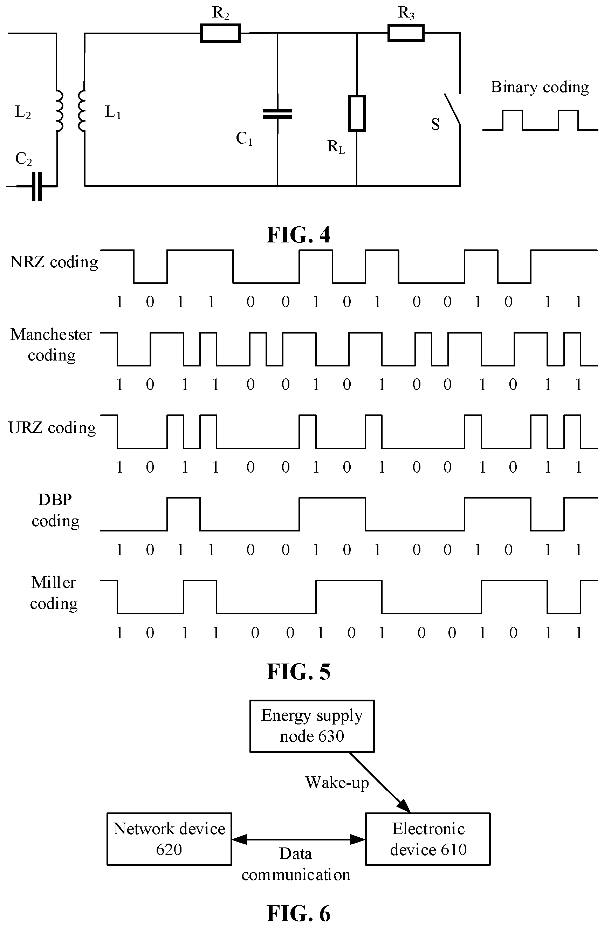

Load modulation technologies mainly include resistive load modulation and capacitive load modulation. FIG. 4 is a schematic diagram of resistive load modulation according to the related art. In resistive load modulation, a load resistor RL is connected in parallel with a third resistor R3, which is turned on or off by a switch S controlled based on binary coding. The on-off state of the third resistor R3 causes a change in voltage on the circuit. The load resistor RL is kept in parallel with a first capacitor C1, the load resistor RL is kept in series with a second resistor R2, and the second resistor R2 is kept in series with a first inductor L1. The first inductor L1 is coupled to a second inductor L2, and the second inductor L2 is kept in series with a second capacitor C2. Amplitude Shift Keying (ASK) can be implemented, that is, signal modulation and transmission are implemented by adjusting the amplitude of the backscatter signal of the zero-power-consumption device. Similarly, in capacitive load modulation, the change of circuit resonant frequency can be implemented by the on-off state of a capacitor, thereby implementing Frequency Shift Keying (FSK), that is, signal modulation and transmission are implemented by adjusting the working frequency of the backscatter signal of the zero-power-consumption device.

The zero-power-consumption device modulates an incoming wave signal by means of load modulation, thereby implementing a backscatter communication process. The zero-power-consumption device has significant advantages: it does not actively transmit signals, and therefore does not require complex radio frequency links, such as a Power Amplifier (PA), a radio frequency filter, etc.; it does not need to actively generate high-frequency signals, and therefore does not require a high-frequency crystal oscillator; with the help of backscatter communication, signal transmission does not consume energy of the zero-power-consumption device itself.

### Ultra-Low Power Consumption Active Transmission Technology

Zero-power-consumption devices can also adopt ultra-low power consumption active transmission technology. Different from backscattering, when a zero-power-consumption device transmits data using ultra-low power consumption active transmission technology, it needs to generate radio frequency (RF) carriers by using a relatively simple and low-power-consumption oscillator, and then modulate the to-be-transmitted information onto the RF carriers. Based on current research, the power consumption of an ultra-low power consumption active transmitter can be as low as several hundred microwatts, thus enabling ultra-low power consumption data transmission.

Next, the coding schemes for zero-power-consumption communication are described: FIG. 5 is a schematic diagram of a coding scheme according to the related art. Data transmitted by an electronic tag can use different types of codes to represent binary "1" and "0". A radio frequency identification (RFID) system usually adopts one of the following coding methods: Non-Return-to-Zero (NRZ) coding, Manchester coding, Unipolar Return-to-Zero (URZ) coding, Differential Binary Phase (DBP) coding, Miller coding, and differential coding. In other words, different pulse signals can be used to represent 0 and 1.

NRZ Coding: Non-Return-to-Zero coding uses a high level to represent binary "1" and a low level to represent binary "0". The NRZ coding in FIG. 5 shows a level diagram of binary data "101100101001011" encoded by using the NRZ method.

Manchester Coding: Manchester coding is also referred to as Split-Phase Coding. In Manchester coding, a binary value is represented by a level change (rising or falling edge) at the midpoint of the bit duration. A negative edge transition at the midpoint of the bit duration indicates binary "1", and a positive edge transition at the midpoint of the bit duration indicates binary "0". A data transmission error occurs when multiple electronic tags transmit data bits with different values simultaneously, causing the received rising edges and falling edges to cancel each other out, resulting in an uninterrupted carrier signal throughout the entire bit duration. In Manchester coding, there cannot be a state without any change within a bit duration. A reader can determine the specific position where a collision occurs by using this error characteristic. Manchester coding facilitates the detection of data transmission errors, and is usually used for data transmission from an electronic tag to a reader when carrier-based load modulation or backscatter modulation is adopted. The Manchester coding in FIG. 5 shows a level diagram of binary data "101100101001011" encoded by using the Manchester method.

URZ Coding: Unipolar Return-to-Zero coding uses a high level in the first half of the bit duration to represent binary "1", and a low level signal that lasts the entire bit duration to represent binary "0". The URZ coding in FIG. 5 shows a level diagram of binary data "101100101001011" encoded by using the URZ method.

DBP Coding: Differential Binary Phase coding uses any edge transition at the midpoint of the bit duration to represent binary "0", and the absence of an edge transition to represent binary "1". In addition, the level is inverted at the start of each bit duration. For a receiver, bit timing can be reconstructed relatively easily. The DBP coding in FIG. 5 shows a level diagram of binary data "101100101001011" encoded by using the DBP method.

Miller Coding: Miller coding uses any edge transition within the midpoint of the bit duration to represent binary "1", and a constant level throughout the next bit duration to represent binary "0". A level transition is generated at the start of the bit duration, which enables a receiver to reconstruct bit timing relatively easily. The Miller coding in FIG. 5 shows a level diagram of binary data "101100101001011" encoded by using the Miller method.

Differential Coding: In differential coding, each binary "1" to be transmitted causes a change in the signal level, whereas for a binary "0", the signal level remains unchanged.

Next, the classification of zero-power-consumption devices is described:

Zero-power-consumption devices can be classified into the following types based on their energy sources and usage modes:

### Passive Zero-Power-Consumption Devices

A passive zero-power-consumption device does not require a built-in battery. When the device approaches a network device, it falls within the near-field range formed by the radiation of the network device's antenna. For example, the network device is a reader in a Radio Frequency Identification (RFID) system. Therefore, the antenna of the zero-power-consumption device generates an induced current through electromagnetic induction, which drives the low-power-consumption chip circuit of the device. This enables the demodulation of forward link signals and the modulation of reverse link signals. For the backscatter link, the zero-power-consumption device can transmit signals by using backscattering or ultra-low power consumption active transmission. Passive zero-power-consumption devices do not require a built-in battery to drive either the forward link or the reverse link, making them true zero-power-consumption devices. Without the need for a battery, their RF circuits and baseband circuits are extremely simple, for instance, they do not require components such as Low Noise Amplifiers (LNAs), Power Amplifiers (PAs), crystal oscillators, or Analog-to-Digital Converters (ADCs). These devices offer numerous advantages including small size, light weight, extremely low cost, and long service life.

### Semi-Passive Zero-Power-Consumption Devices

A semi-passive zero-power-consumption device does not have a conventional battery installed. It can use an RF energy harvesting module to collect energy from radio waves and store the harvested energy in an energy storage unit, such as a capacitor. Once the energy storage unit has accumulated sufficient energy, it can drive the low-power-consumption chip circuit of the device, enabling the demodulation of forward link signals and the modulation of reverse link signals. For the backscatter link, the device can transmit signals via backscattering or ultra-low power consumption active transmission.

Semi-passive zero-power-consumption devices do not rely on a built-in battery for either forward or reverse link operation; the energy stored in the capacitor comes from radio wave energy harvested by the RF energy harvesting module, making them true zero-power-consumption devices. They inherit many advantages of passive zero-power-consumption devices, such as small size, light weight, very low cost, and long service life.

### Active Zero-Power-Consumption Devices

In some scenarios, zero-power-consumption devices can be active devices with a built-in battery. The battery is used to drive the low-power-consumption chip circuit of the device, enabling the demodulation of forward link signals and the modulation of reverse link signals. However, for the backscatter link, the device can still transmit signals through backscattering or ultra-low power consumption active transmission. Therefore, the zero-power-consumption characteristic of active zero-power-consumption devices is mainly reflected in the fact that signal transmission on the reverse link does not consume the device's own power, but instead uses backscattering. In active zero-power-consumption devices, the built-in battery supplies power to the RFID chip, which increases the reading and writing distance of the tag and improves communication reliability. As a result, they are suitable for scenarios with relatively high requirements for communication distance and reading latency.

Next, the classification of zero-power-consumption devices based on transmitter types is described:
(1) Backscatter-Based Zero-Power-Consumption Devices
   This type of device uses backscattering as described above for uplink data transmission. It does not have an active transmitter capable of independent signal emission, but only a backscatter transmitter. Therefore, when transmitting uplink data, the device requires a carrier signal provided by the network device, and achieves uplink data transmission by backscattering based on this carrier signal.
(2) Active Transmitter-Based Zero-Power-Consumption Devices
   This type of device uses an active transmitter with independent emission capability for uplink data transmission. Thus, when transmitting uplink data, the device can transmit data using its own active transmitter without needing a carrier signal from the network device. Examples of active transmitters suitable for zero-power-consumption devices include ultra-low power consumption Amplitude Shift Keying (ASK) transmitters and ultra-low power consumption Frequency Shift Keying (FSK) transmitters. Based on current implementations, such transmitters can achieve an overall power consumption of 400-600 microwatts when transmitting a 100-microwatt signal.
(3) Zero-Power-Consumption Devices with Both Backscatter and Active Transmitters
   This type of device supports both backscattering and active transmitters. The device can determine whether to use backscattering or active transmission via the active transmitter based on different conditions (e.g., remaining power level, availability of ambient energy sources) or according to scheduling instructions from the network device.

Next, cellular Internet of Things (IoT) is described:
Cellular IoT is experiencing vigorous development. For example, the 3rd Generation Partnership Project (3GPP) has standardized IoT technologies such as NarrowBand-Internet of Things (NB-IoT), Machine-Type Communications (MTC), and RedCap. However, there are still many IoT communication scenarios whose requirements cannot be met, such as:

### Harsh Communication Environments

Certain IoT scenarios may involve extreme conditions such as high temperature, extremely low temperature, high humidity, high pressure, high radiation, or high-speed movement. Examples include ultra-high-voltage substations, high-speed train track monitoring, alpine region environmental monitoring, and industrial production lines. In these scenarios, conventional IoT terminal devices cannot operate due to the limitations of their power supplies, and extreme environments also make maintenance (e.g., battery replacement) difficult.

### Demands for Ultra-Small Terminal Form Factors

Certain IoT communication scenarios, such as food traceability, commodity circulation, and smart wearables, require terminals to have an ultra-small size for convenient deployment. For example, IoT terminal devices used for commodity management in the circulation sector are often in the form of electronic tags, embedded into product packaging in a very compact form. Another example is lightweight wearable loT terminal devices, which can meet user needs while enhancing user experience.

### Demands for Ultra-Low-Cost IoT Communication

Numerous IoT communication scenarios require terminal devices to be sufficiently low-cost to improve competitiveness compared to alternative technologies. For instance, in logistics or warehousing scenarios, to facilitate the management of a large number of circulating items, IoT terminal devices can be attached to each item, enabling precise full-process and full-lifecycle management of logistics through communication between the terminal devices and the logistics network. These scenarios require IoT terminal devices to have a highly competitive price point.

Therefore, to address these unmet IoT communication needs, there is a need to develop ultra-low-cost, ultra-small-sized, battery-free, and maintenance-free IoT solutions in cellular IoT, and zero-power-consumption IoT can exactly meet these requirements.

Zero-power-consumption IoT is also known as Ambient IoT or passive IoT. Ambient IoT devices refer to IoT devices powered by various ambient energy sources, such as RF energy, light energy, solar energy, thermal energy, and mechanical energy. These devices may have no energy storage capability or only very limited energy storage capability (e.g., using a capacitor with a capacitance of several tens of microfarads). Compared with existing IoT devices, Ambient IoT devices offer numerous advantages, including no need for conventional batteries, maintenance-free operation, small size, low complexity, low cost, and a long service life cycle.

Zero-power-consumption IoT can be applied to at least the following four types of scenarios:
(1) Object identification, such as logistics management, production line product management, and supply chain management;
(2) Environmental monitoring, such as temperature, humidity, and harmful gas monitoring in working environments and natural environments;
(3) Positioning, such as indoor positioning, smart item finding, and production line item positioning;
(4) Smart control, such as intelligent control of various electrical appliances in smart homes (e.g., turning air conditioners on/off, adjusting temperature) and intelligent control of various facilities in agricultural greenhouses (e.g., automatic irrigation, fertilization).

Next, the communication process of Ambient IoT devices is described:

In future cellular passive IoT, WLAN passive IoT, or Ambient IoT systems, new types of Ambient IoT devices (electronic devices) can be supported to meet the corresponding IoT communication requirements in different application scenarios.

In actual deployment scenarios, to support the aforementioned electronic devices, Access Points (APs) with the capability to communicate with these devices are required. However, in some application scenarios, a large number of APs supporting traditional technologies have already been deployed. If these existing APs can support electronic devices powered by ambient energy, they can maintain traditional communication functions while reducing power consumption during communication, making full use of the deployed APs and reducing the consumption of material and financial resources.

FIG. 6 is a schematic diagram of a communication process of an Ambient IoT device according to an exemplary embodiment of the present disclosure. An electronic device 610, which is a new type of Ambient IoT device, has the capability of data communication with a network device 620 in a WiFi system. It can be deployed in the WiFi system to fully utilize existing network infrastructure and reduce network deployment costs.

However, since the network device 620 in a WiFi system usually does not have functions such as wireless energy supply, a new network node, such as the energy supply node 630 in FIG. 6 (also referred to as an auxiliary node), is deployed to provide wireless energy supply for the electronic device 610. The network device 620 in the WiFi system can be an AP.

Next, the wake-up receiver is introduced.

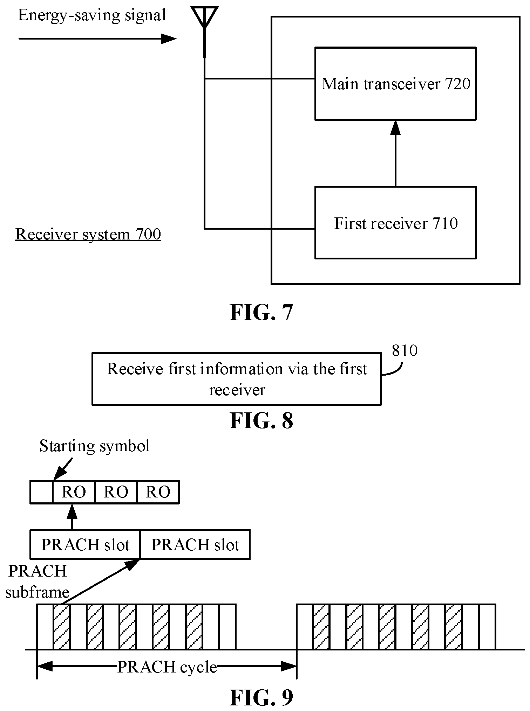

FIG. 7 is a schematic diagram of a receiver system 700 according to the related art. The receiver system 700 includes a first receiver 710 and a main transceiver 720. The first receiver 710 may be referred to as a Wake-Up Receiver (WUR).

In some embodiments, the main transceiver 720 can be equivalently understood as a main transceiver or a main air interface communication unit.

In some embodiments, the main transceiver 720 includes a receiver.

In some embodiments, the main transceiver 720 includes a receiver and a transmitter.

To further save power, a WUR is introduced to receive energy-saving signals. The wake-up receiver has the features of extremely low cost, extremely low complexity, and extremely low power consumption, and mainly receives energy-saving signals based on envelope detection. Therefore, the modulation scheme and waveform of the energy-saving signal received by the wake-up receiver are different from those of signals carried on the Physical Downlink Control Channel (PDCCH) defined in relevant standards. The energy-saving signal is mainly an envelope signal obtained by performing Amplitude Shift Keying (ASK) modulation on a carrier signal. The demodulation of the envelope signal can also be completed by a low-power-consumption circuit driven by energy provided by wireless RF signals, so the wake-up receiver can be passive. The wake-up receiver can also be actively powered by an electronic device (terminal device). Regardless of the power supply mode, the receiver greatly reduces power consumption compared with traditional receivers. For example, a WUR may have a power consumption of less than 1 milliwatt, which is much lower than the power consumption of a main transceiver, which ranges from tens to hundreds of milliwatts. The wake-up receiver can be integrated into the electronic device as an additional module of the electronic device's receiver, or can be used independently as a wake-up function module of an electronic device.

As shown in FIG. 7, in the initial state, the first receiver 710 is in the wake-up state and the main transceiver 720 is in the off state. The first receiver 710 receives the energy-saving signal and determines whether to wake up the main transceiver 720 according to the indication of the energy-saving signal. If the main transceiver 720 needs to be woken up, the network device or the energy supply node can transmit an energy-saving signal indicating wake-up to the first receiver 710, and the first receiver 710 wakes up the main transceiver 720 after receiving the energy-saving signal. Otherwise, the main transceiver 720 remains off.

In some embodiments, transmitting the energy-saving signal indicates wake-up; not transmitting the energy-saving signal indicates no wake-up.

In some embodiments, transmitting an energy-saving signal carrying a wake-up indication indicates wake-up; transmitting an energy-saving signal carrying a non-wake-up indication indicates no wake-up.

Therefore, the electronic device can use the first receiver 710 to monitor energy-saving signals. When the electronic device has no service or paging message, the electronic device can keep using the first receiver 710. Only when the electronic device has a service, the electronic device receives the energy-saving signal to wake up the main transceiver 720 for data transmission and reception. Compared with the traditional mode where the main transceiver 720 is always used for data transmission and reception, this reduces the power consumption of the electronic device.

Next, energy harvesting by the electronic device is introduced.

When the electronic device is an Ambient IoT device, the electronic device obtains energy from an ambient energy source, including RF energy, solar energy, light energy, thermal energy, kinetic energy, etc. The type of ambient energy used by the electronic device is determined based on the application scenario and working environment. The electronic device can use one or more types of ambient energy. Since RF energy can be provided by radio waves transmitted by network devices with controllable transmission time and power, Ambient IoT devices using RF energy can be applied to various scenarios.

In a case that the wireless network is a WiFi network, the network device can be an AP in the WiFi network, and the electronic device can receive radio waves transmitted by the AP for energy harvesting. However, APs usually operate in the 2.4 GHz or 5 GHz frequency bands, where radio wave attenuation is high, and their transmit power is limited by relevant regulations. Meanwhile, the duration of radio wave transmitted by APs depends on service requirements in the network, with no definite pattern in transmission time and duration. Therefore, directly using radio waves transmitted by APs for energy harvesting is often inefficient. To address this, a dedicated energy supply node can be deployed to provide wireless energy supply for electronic devices.

The energy supply node can transmit energy supply signals in a frequency band different from the operating frequency band of the AP (e.g., 2.4 GHz), such as a frequency band below 1 GHz, specifically 920 MHz-925 MHz.

The time and duration of the energy supply signal transmitted by the energy supply node can be controlled by signaling transmitted by the AP, or set through an application program.

The energy supply signal can be a single-frequency sinusoidal signal, a broadband modulated signal, or a specified waveform such as On-Off Keying (OOK), Orthogonal Frequency Division Multiplexing (OFDM), triangular wave, sinusoidal wave, or any other arbitrary waveform.

The power of energy harvesting performed by the electronic device is relatively low. Currently, the sensitivity of energy harvesting is around -20 dBm, meaning that the electronic device can only harvest energy when the strength of the received energy supply signal is greater than -20 dBm. Assuming the received energy supply signal is -20 dBm (i.e., 10 microwatts) and the energy harvesting efficiency is 50%, the power of energy harvested by the electronic device at this time is 5 microwatts. The electronic device can use an energy storage component to store the harvested energy, and communicate with the network after acquiring sufficient energy.

In some embodiments, the electronic device includes a first receiver (wake-up receiver) and a main transceiver (main receiver). The power consumed by the wake-up receiver (WUR) (usually less than 1 milliwatt) is much lower than that consumed by the main receiver (usually tens to hundreds of milliwatts). For example, if the main receiver requires 50 milliwatts to maintain the wake-up state, while the wake-up receiver only requires 0.5 milliwatts to stay awake, the time required for the electronic device to harvest enough energy to keep the main receiver awake is 100 times that required to keep the wake-up receiver awake.

With the continuous evolution of wireless communication technologies, IoT technologies have been applied to all aspects of production and daily life. Different scenarios impose different requirements on the power consumption and latency of loT devices, and electronic devices applied in the IoT often face the problem of slow receiver wake-up speed during communication. For an electronic device comprising a WUR and a main transceiver, the energy-saving signal received by the WUR can carry additional functions besides waking up the main transceiver, thereby sharing the workload of the main transceiver and reducing the power consumption of the electronic device. FIG. 8 is a flowchart of an information transmission method according to an exemplary embodiment of the present disclosure. The method is executed by an electronic device that includes a first receiver and a main transceiver, where the operating power consumption of the first receiver is lower than that of the main transceiver. The method includes the following operations.

At operation 810, first information is received via the first receiver.

The first information is used for communication between the electronic device and a wireless network. The wireless network includes at least one of a WiFi network, a cellular network, or a wireless energy supply network.

In some embodiments, the first information is received by the first receiver when the first receiver is in the wake-up state.

In some embodiments, being in the wake-up state includes at least one of the following:
Being always in the wake-up state;
Being in the wake-up state periodically;

Entering the wake-up state after receiving a first energy-saving signal.

The first energy-saving signal is used to indicate whether to wake up the first receiver. This embodiment takes the scenario where the first receiver is always in the wake-up state as an example for illustration.

In some embodiments, the first information includes: information used for communication between the first receiver and the wireless network.

In some embodiments, the electronic device is an active device, which refers to a device with its own power supply and the capability of actively generating and transmitting signals, such as a mobile phone, a computer, a smart watch, a smart band, etc.

In some embodiments, the electronic device is a passive device, which refers to a device that does not need a power supply or can operate by receiving energy from other devices, and may be referred to as a zero-power-consumption device, zero-power-consumption terminal, low-power-consumption device, low-power-consumption terminal, etc.

In some embodiments, the electronic device harvests energy from the environment and may be referred to as an ambient energy IoT device.

In some embodiments, the electronic device includes an energy harvesting module configured to harvest ambient energy from the environment, and the ambient energy is used to power the first receiver.

In some embodiments, the electronic device is deployed at a fixed location and may be referred to as a zero-power-consumption station, low-power-consumption station, etc.

In some embodiments, when the first receiver is in the wake-up state, the network device or the energy supply node 630 in the embodiment shown in FIG. 6 transmits the first information to the first receiver. The first information may be referred to as auxiliary information, which helps the electronic device quickly establish a connection with the wireless network and complete communication after waking up the main transceiver.

In some embodiments, the first information includes: information used for communication between the main transceiver and the wireless network. Equivalently, the first information may be understood as including information used for communication between the main transceiver (or main air interface communication unit) and the wireless network.

In some embodiments, the content related to the first information can be applied when the electronic device is in the Radio Resource Control CONNECTED (RRC CONNECTED) state, or after the electronic device is associated with the network device.

In some embodiments, the first information includes, but is not limited to, at least one of the following types of information:
configuration information for receiving downlink data;
configuration information for receiving downlink control signaling;
configuration information for receiving system broadcast;
configuration information for transmitting uplink data;
configuration information for transmitting uplink control signaling;
Synchronization information for synchronization;
configuration information for receiving a second energy-saving signal;
Capability information of the wireless network;
configuration information for random access;
Information related to the waveform used for communication;
Information related to the subcarrier spacing used for communication;
Operator-related information; or
configuration information of a paging message.

The second energy-saving signal is used to indicate whether to wake up the main transceiver.

In some embodiments, the configuration information for receiving downlink data includes at least one of the following: a time-domain position for receiving downlink data, a frequency-domain position for receiving downlink data, or a cycle for receiving downlink data, etc.

In some embodiments, the configuration information for receiving downlink control signaling includes at least one of the following: a time-domain position for receiving downlink control signaling, a frequency-domain position for receiving downlink control signaling, a control resource set for monitoring downlink control signaling, a search space set for monitoring downlink control signaling, or a Radio-Network Temporary Identifier (RNTI) for monitoring downlink control signaling, etc.

In some embodiments, the configuration information for receiving downlink control signaling includes: information indicating Physical Downlink Control Channel (PDCCH) monitoring.

In some embodiments, the information indicating PDCCH monitoring includes at least one of the following:
configuration information of a PDCCH search space set;
configuration information of a PDCCH search space set group; or
PDCCH skipping information.

A PDCCH search space set group includes at least one PDCCH search space set. A PDCCH search space set or a PDCCH search space set group is used to indicate PDCCH monitoring occasions. PDCCH skipping information is used to indicate PDCCH monitoring is not to be performed at one or more specified PDCCH monitoring occasions or within a specified time period.

Regarding the PDCCH search space set and the PDCCH search space set group:

The electronic device is configured with multiple PDCCH search space sets or multiple PDCCH search space set groups. When being configured with PDCCH search space set groups, a PDCCH search space set group includes at least one PDCCH search space set. PDCCH search space set group Switch is used to indicate a PDCCH search space set or a PDCCH search space set group.

In some embodiments, different PDCCH search space sets (or PDCCH search space set groups) correspond to different densities of PDCCH monitoring occasions in the time domain.

For example, when two PDCCH search space set groups are configured, the first PDCCH search space set group corresponds to a sparse density of PDCCH monitoring occasions, and the second PDCCH search space set group corresponds to a dense density of PDCCH monitoring occasions. A sparse density of PDCCH monitoring occasions means that the density is less than a first density threshold, while a dense density means that the density is greater than a second density threshold. The first density threshold and the second density threshold are preset and may be the same or different.

When the electronic device has few communication services, the electronic device can use the first PDCCH search space set group to monitor network scheduling. Since the density of PDCCH monitoring occasions is low, the number of monitoring times is small, which can decrease the power consumption of the electronic device.

When the electronic device has many communication services, the electronic device can use the second PDCCH search space set group to monitor network scheduling. Due to the high density of PDCCH monitoring occasions, the number of monitoring times is large, enabling the electronic device to receive data in a timely manner and achieve fast data transmission.

In some embodiments, different indexes of PDCCH search space sets indicate respective PDCCH search space sets, the indexes of the PDCCH search space sets are preconfigured by the network device for the electronic device.

In some embodiments, different indexes of PDCCH search space set groups indicate respective PDCCH search space set groups, the indexes of the PDCCH search space set groups are preconfigured by the network device for the electronic device.

### Regarding PDCCH skipping information:

In some embodiments, the network device needs to provide services to multiple electronic devices simultaneously. When an electronic device monitors the PDCCH based on a PDCCH search space set, there may be PDCCH monitoring occasions during which the network device does not transmit a PDCCH to the electronic device. During these PDCCH monitoring occasions, the network device may be scheduling other electronic devices. To reduce the power consumption of the electronic device, the network device transmits PDCCH skipping information to the electronic device, indicating that the electronic device does not need to monitor the PDCCH at specified PDCCH monitoring occasion(s) or within a specified time period.

In some embodiments, the PDCCH skipping information may also be referred to as PDCCH monitoring skipping information or PDCCH monitoring ignoring information.

In some embodiments, the configuration information for receiving system broadcast includes at least one of the following: a time-domain position of broadcast frames, a frequency-domain position of broadcast frames, or a broadcast cycle of broadcast frames, etc.

In some embodiments, the configuration information for receiving system broadcast includes: information related to one or more system parameters.

In some embodiments, the information related to one or more system parameters includes at least one of the following:
configuration information of system bandwidth;
configuration information of subcarrier spacing;
configuration information of access class barring;
configuration information of cell barring.

In some embodiments, the configuration information for transmitting uplink data includes at least one of the following: a time-domain position for transmitting uplink data, a frequency-domain position for transmitting uplink data, a cycle for transmitting uplink data, or etc.

In some embodiments, the configuration information for transmitting uplink control signaling includes at least one of the following: a time-domain position for transmitting uplink control signaling, a frequency-domain position for transmitting uplink control signaling, or etc.

In some embodiments, the synchronization information for synchronization includes at least one of the following: synchronization information for time-domain synchronization, synchronization information for frequency-domain synchronization, etc., which helps the first receiver achieve time-frequency synchronization with the wireless network.

In some embodiments, the synchronization information includes at least one of the following:
configuration information of a cell identity (ID);
configuration information of a transmission cycle of a synchronization signal;
configuration information of a time-frequency resource position of the synchronization signal;
configuration information of a resource element (RE) density of the synchronization signal;
configuration information of a port of the synchronization signal;
configuration information of a transmission power of the synchronization signal;
Quasi Co-Located (QCL) information of the synchronization signal; or
information indicating one or more available reference signals.

In some embodiments, the signal carrying the synchronization information may be at least one of a Primary Synchronization Signal (PSS), a Secondary Synchronization Signal (SSS), a Channel-State Information Reference Signal (CSI-RS), or a Tracking Reference Signal (TRS).

In some embodiments, the information indicating one or more available reference signals includes an indication of available reference signal(s) and/or unavailable reference signal(s). For example, the network device configures multiple reference signals for the electronic device, and uses a bit bitmap in the second energy-saving signal to indicate which of these multiple reference signals are available and/or unavailable. For instance, the bitmap "10010" indicates five reference signals, where "1" indicates that a reference signal is available and "0" indicates that a reference signal is unavailable. That is, the first and fourth reference signals are available, while the second, third, and fifth reference signals are unavailable. Alternatively, "0" may indicate that a reference signal is available and "1" may indicate that a reference signal is unavailable, meaning the second, third, and fifth reference signals are available, while the first and fourth reference signals are unavailable.

In some embodiments, the information indicating one or more available reference signals includes an indication of the usage duration of the available reference signal(s).

In some embodiments, the configuration information for receiving the second energy-saving signal includes at least one of the following: a time-domain position for receiving the second energy-saving signal, or a frequency-domain position for receiving the second energy-saving signal, etc. The second energy-saving signal is used to indicate whether to wake up the main transceiver.

In some embodiments, the capability information of the wireless network includes at least one of the following: a code rate supported by the wireless network, a Modulation and Coding Scheme (MCS) supported by the wireless network, or etc. Such information is generally carried in a beacon frame(s).

In some embodiments, the configuration information for random access includes: Physical Random Access Channel (PRACH) configuration information.

In some embodiments, the PRACH configuration information includes at least one of the following:
configuration information of a time-frequency resource position of a PRACH Occasion (RO);
configuration information of a random access preamble index; or
configuration information of a PRACH configuration index.

In a case that the electronic device is in the Radio Resource Control idle (RRC idle) state or the Radio Resource Control inactive (RRC inactive) state, the electronic device, after being woken up, needs to initiate a random access procedure to establish an RRC connection and communicate with the wireless network. To accelerate the random access procedure, the configuration information for random access includes configuration information of PRACH, such as configuration information of a time-frequency resource position of an RO, configuration information of an RO index, or configuration information of a time interval (RO timing) between RO and the second energy-saving signal; and/or configuration information of a random access preamble index, or configuration information of a random access preamble index set; and/or configuration information of a PRACH configuration index (different PRACH configuration indexes correspond to different PRACH cycles, PRACH slots, starting symbol positions within slots, random access preamble formats, subcarrier spacings, etc.).

FIG. 9 is a schematic diagram of the time-domain configuration of PRACH resources according to an exemplary embodiment of the present disclosure. A PRACH cycle includes multiple PRACH subframes or PRACH slots. For example, a PRACH subframe includes two PRACH slots, and each PRACH slot includes three ROs. According to the indication of the PRACH configuration index, the starting symbol is located before the first RO.

Based on the aforementioned PRACH configuration information, the electronic device can transmit a random access preamble corresponding to a random access preamble index on the indicated RO in a contention-free random access manner. The random access preamble index on the RO is reserved by the network device for the electronic device, preventing random access collisions between the electronic device and other electronic devices, thereby reducing access latency and improving access efficiency.

In some embodiments, the information related to the waveform used for communication includes at least one of the following:
Orthogonal Frequency Division Multiplexing (OFDM);
Discrete Fourier Transform Spread OFDM (DFTS-OFDM);
Direct Sequence Spread Spectrum (DSSS).

The waveforms used for communication are applied to the DownLink (DL) and/or UpLink (UL) of the communication between the main transceiver and the wireless network.

In some embodiments, the information related to the subcarrier spacing used during communication is applied to the DL and/or UL of the communication between the main transceiver and the wireless network. Examples of subcarrier spacing include 15 KHz, 30 KHz, 60 KHz, 120 KHz, 312.5 KHz, 31.25 KHz, etc.

In some embodiments, the operator-related information includes at least one of the following:
Information related to the Public Land Mobile Network (PLMN);
Information related to the Tracking Area ID;
Information related to the Cell-ID;
Information related to the Base Station System ID (BSS-ID).

In some embodiments, the configuration information of paging messages includes at least one of the following:
configuration information of a Paging Frame (PF);
configuration information of a Paging Occasion (PO).

The paging frame and paging occasion are information related to the mechanism for initiating calls or other notifications to the electronic device. A paging frame is a time window used to transmit paging information, while a paging occasion is a specific time point within this time window for performing paging.

It should be noted that the examples of the foregoing information are not intended to limit the first information. The aforementioned first information may have different names or definitions in different wireless networks. For example, system information broadcast configuration information is adopted in cellular networks, and beacon frame broadcast configuration information is adopted in WiFi networks, and so on, which will not be elaborated here.

In some embodiments, the form of the aforementioned frequency position includes: channel form, bandwidth form, carrier form, etc. For example, downlink data is received on a first channel.

In some embodiments, the information related to the frequency position enables the electronic device to obtain the frequency position for communication between the main transceiver and the wireless network through the first receiver, avoiding the main transceiver from acquiring the frequency position through frequency scanning after being woken up, thereby reducing power consumption.

In some embodiments, the first information is transmitted via one or more data frames; or, the first information is transmitted via one or more beacon frames.

In summary, the method according to this embodiment receives the first information through the first receiver, where the first information is used for communication between the electronic device and the wireless network. This avoids the high-power-consumption main transceiver from receiving the first information, and thus the main transceiver, after being woken up, does not need to read the first information from other frames, helping the electronic device quickly establish a connection with the wireless network.

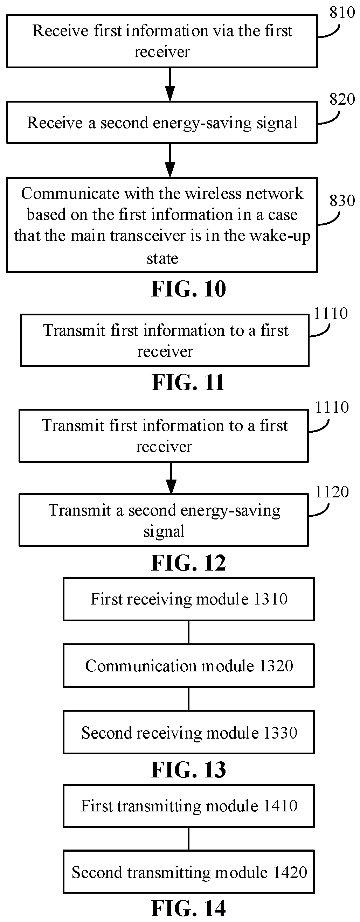

FIG. 10 is a flowchart of an information transmission method according to an exemplary embodiment of the present disclosure. The method is executed by an electronic device that includes a first receiver and a main transceiver, where an operating power consumption of the first receiver is lower than an operating power consumption of the main transceiver. The method includes the following operations.

At operation 810, first information is received via the first receiver.

For specific implementation details, refer to operation 810 in the embodiment shown in FIG. 8, which will not be repeated here.

At operation 820, a second energy-saving signal is received.

The second energy-saving signal is used to indicate whether to wake up the main transceiver.

In some embodiments, waking up the main transceiver may be equivalently understood as: waking up the main transceiver; or equivalently understood as: waking up the main air interface communication unit. The above three expressions have the same meaning in the embodiments of the present disclosure.

In some embodiments, waking up the main transceiver may be equivalently understood as: monitoring the transmission of downlink data or data frames through the main transceiver; or equivalently understood as: monitoring the control channel used for scheduling uplink data, downlink data, or data frames through the main transceiver. The above three expressions have the same meaning in the embodiments of the present disclosure.

In some embodiments, not waking up the main transceiver may be equivalently understood as: keeping the main transceiver in an off state; or equivalently understood as: keeping the main transceiver in a Discontinuous Reception (DRX) monitoring state. The above three expressions have the same meaning in the embodiments of the present disclosure.

In some embodiments, the second energy-saving signal indicating wake-up and the second energy-saving signal indicating non-wake-up differ in at least one of the following aspects:
Different waveforms;
Different modulation schemes;
Different sequence lengths;
Different sequences;
Different frequencies used;
Different frequency ranges used;
Different values of the carried information bits.

For example, the first energy-saving signal includes a first sequence or a second sequence, where the first sequence is used to indicate waking up the first receiver, and the second sequence is used to indicate not waking up the first receiver. For instance, the first sequence is Zadoff-Chu (ZC) sequence 1, used to indicate waking up the first receiver, and the second sequence is ZC sequence 2, used to indicate not waking up the first receiver, which is not limited in the embodiment of the present disclosure.

For another example, the first energy-saving signal has a first sequence length or a second sequence length, where the first sequence length is used to indicate waking up the first receiver, and the second sequence length is used to indicate not waking up the first receiver. For instance, the first sequence length is 16 bits, used to indicate waking up the first receiver, and the second sequence length is 8 bits, used to indicate not waking up the first receiver; alternatively, the first sequence length is 8 bits, used to indicate waking up the first receiver, and the second sequence length is 16 bits, used to indicate not waking up the first receiver, which is not limited in the embodiment of the present disclosure.

In some embodiments, the reception of the second energy-saving signal includes any one of the following two cases:
Case 1: After the first receiver is woken up, the second energy-saving signal is received through the first receiver.

In a case that the first receiver is woken up, the first receiver receives the second energy-saving signal, demodulates the second energy-saving signal, and transmits the corresponding content to the main transceiver to indicate whether to wake up the main transceiver.

In some embodiments, after the first receiver is woken up, it may be equivalently understood as: after the first receiver enters a state of monitoring the transmission of downlink data or data frames; or equivalently understood as: after the first receiver enters a state of monitoring the control channel used for scheduling uplink data, downlink data, or data frames. The above three expressions have the same meaning in the embodiments of the present disclosure.

In some embodiments, the first receiver monitors the second energy-saving signal based on a DRX cycle; if the second energy-saving signal associated with the first DRX cycle is detected, the main transceiver is kept in the wake-up state or the non-wake-up state during the active time period of the first DRX cycle, according to the indication of the second energy-saving signal associated with the first DRX cycle.

The second energy-saving signal is transmitted in any one of the following two ways:
(1) The second energy-saving signal is always transmitted, and each second energy-saving signal carries a wake-up indication or a non-wake-up indication.
   The first receiver monitors the second energy-saving signal based on a DRX cycle; if the second energy-saving signal associated with the first DRX cycle is detected, the main transceiver is controlled to be in the wake-up state during the active time period of the first DRX cycle, according to the wake-up indication carried in the second energy-saving signal; or the main transceiver is kept in the non-wake-up state during the active time period of the first DRX cycle, according to the wake-up indication carried in the second energy-saving signal.
(2) The second energy-saving signal is transmitted on demand, indicating wake-up when being transmitted, and indicating non-wake-up when not being transmitted.

The first receiver monitors the second energy-saving signal based on a DRX cycle; if the second energy-saving signal associated with the first DRX cycle is detected, the main transceiver is kept in the wake-up state during the active time period of the first DRX cycle, according to the indication of the second energy-saving signal associated with the first DRX cycle; if the second energy-saving signal associated with the first DRX cycle is not detected, the main transceiver is kept in the non-wake-up state during the active time period of the first DRX cycle.

In some embodiments, the second energy-saving signal associated with the first DRX cycle may be transmitted before the active time period of the first DRX cycle, or transmitted at the initial position within the active time period of the first DRX cycle.

Case 2: the second energy-saving signal is received through the main transceiver.

Both the first receiver and the main transceiver are in the non-wake-up state.

In some embodiments, the main transceiver monitors the second energy-saving signal based on a DRX cycle; if the second energy-saving signal associated with the first DRX cycle is detected, the main transceiver is kept in the wake-up state or the non-wake-up state during the active time period of the first DRX cycle, according to the indication of the second energy-saving signal associated with the first DRX cycle.

The second energy-saving signal is transmitted in any one of the following two ways:
(1) The second energy-saving signal is always transmitted, and each second energy-saving signal carries a wake-up indication or a non-wake-up indication.
   The main transceiver monitors the second energy-saving signal based on a DRX cycle; if the second energy-saving signal associated with the first DRX cycle is detected, the main transceiver is controlled to be in the wake-up state during the active time period of the first DRX cycle, according to the wake-up indication carried by the second energy-saving signal; or the main transceiver is kept in the non-wake-up state during the active time period of the first DRX cycle, according to the non-wake-up indication carried by the second energy-saving signal.
(2) The second energy-saving signal is transmitted on demand, indicating wake-up when being transmitted, and indicating non-wake-up when not being transmitted.

The main transceiver monitors the second energy-saving signal based on a DRX cycle; if the second energy-saving signal associated with the first DRX cycle is detected, the main transceiver is kept in the wake-up state during the active time period of the first DRX cycle, according to the indication of the second energy-saving signal associated with the first DRX cycle; if the second energy-saving signal associated with the first DRX cycle is not detected, the main transceiver is kept in the non-wake-up state during the active time period of the first DRX cycle.

In some embodiments, the second energy-saving signal associated with the first DRX cycle may be transmitted before the active time period of the first DRX cycle, or transmitted at the initial position within the active time period of the first DRX cycle.

In some embodiments, keeping the main transceiver in the wake-up state during the active time period of the first DRX cycle may be equivalently understood as: monitoring the transmission of downlink data or data frames through the main transceiver throughout the active time period of the first DRX cycle; or equivalently understood as: monitoring the control channel used for scheduling uplink data, downlink data, or data frames through the main transceiver throughout the active time period of the first DRX cycle. The above three expressions have the same meaning in the embodiments of the present disclosure.

Keeping the main transceiver in the non-wake-up state during the active time period of the first DRX cycle may be equivalently understood as: the main transceiver does not monitor the transmission of downlink data or data frames throughout the active time period of the first DRX cycle; or equivalently understood as: the main transceiver does not monitor the control channel used for scheduling uplink data, downlink data, or data frames throughout the active time period of the first DRX cycle. The above three expressions have the same meaning in the embodiments of the present disclosure.

A DRX cycle includes an "On Duration" and an "Opportunity for DRX". During the On Duration (active time period), the electronic device is in the wake-up state for receiving data; during the Opportunity for DRX, the electronic device is in the sleep state where no data is received.

For example, the electronic device monitors the second energy-saving signal based on a DRX cycle, and detects the second energy-saving signal before the active time period of the first DRX cycle, where the second energy-saving signal indicates that the main transceiver is to be in the wake-up state. Then, the main transceiver is kept in the wake-up state during the active time period of the first DRX cycle.

In some embodiments, the second energy-saving signal further carries an identifier of a device to be woken up or an identifier of a device group to be woken up.

The identifier of the device group to be woken up, i.e., the device group ID to be woken up, is the ID of the group to which the device to be woken up belongs, and the group includes at least one device to be woken up.

Whether the electronic device needs to be woken up is determined according to the ID of the device to be woken up or the device group ID to be woken up carried in the second energy-saving signal. If the ID of the electronic device is the same as the ID of the device to be woken up, the electronic device is woken up; if the ID of the electronic device is different from the ID of the device to be woken up, the electronic device is not woken up. If the group ID of the electronic device is the same as the device group ID to be woken up, the electronic device is woken up; if the group ID of the electronic device is different from the device group ID to be woken up, the electronic device is not woken up.

In some embodiments, the second energy-saving signal further carries synchronization information, which is used for synchronization between the wireless network and the electronic device. The synchronization includes time-domain synchronization and/or frequency-domain synchronization. The wireless network includes at least one of a WiFi network, a cellular network, or a wireless energy supply network.

In some embodiments, the network device transmits the first information first, and then transmits the second energy-saving signal.

In some embodiments, the first information is carried in the second energy-saving signal.

After waking up the first receiver, the network device transmits the second energy-saving signal. By receiving the second energy-saving signal, the electronic device can obtain at least one of the first information, the information indicating whether to wake up the main transceiver, or the synchronization information for synchronization.

At operation 830, communication is performed with the wireless network based on the first information in a case that the main transceiver is in the wake-up state.

When the main transceiver is in the wake-up state, the electronic device obtains the configuration of the wireless network based on the content carried by the first information.

For example, if the first information includes configuration information for receiving downlink data, the main transceiver receives the downlink data based on information such as the time-domain position and frequency-domain position for receiving downlink data. Before receiving the downlink data, the main transceiver can be kept in the non-wake-up state as much as possible, thereby saving more power.

If the first information includes configuration information for receiving downlink control signaling, where the downlink control signaling is used to indicate information related to receiving downlink data, the main transceiver monitors the downlink control signaling based on information such as the time-domain position and frequency-domain position for receiving downlink control signaling, and receives the downlink data according to the information related to receiving downlink data indicated by the downlink control signaling, so as to communicate with the wireless network. By receiving the configuration information in advance, the main transceiver can remain in the non-wake-up state for a longer time, thereby reducing the power consumption of the electronic device.

If the configuration information for receiving downlink control signaling includes information indicating PDCCH monitoring, the PDCCH monitoring occasions are indicated by the PDCCH search space set (or PDCCH search space set group), and the PDCCH skipping information indicates PDCCH monitoring is not to be performed at one or more specified PDCCH monitoring occasions or within a specified time period, thereby reducing the power consumption of the electronic device.

If the first information includes configuration information for receiving system broadcast, the main transceiver receives the system broadcast of the wireless network based on information such as the time-domain position and frequency-domain position of broadcast frames. By receiving the configuration information of the system broadcast in advance, the main transceiver can remain in the non-wake-up state during the stages of receiving the system broadcast and acquiring the configuration information in the system broadcast, thereby saving more power.

If the configuration information for receiving system broadcast includes information related to system parameter(s), the first receiver receives configuration information of at least one of system bandwidth, subcarrier spacing, access class barring, and cell barring in advance. The main transceiver remains in the non-wake-up state during the stages of receiving the system broadcast and acquiring the configuration information in the system broadcast based on the configuration information for receiving system broadcast, thereby saving more power.

If the first information includes configuration information for transmitting uplink data, the main transceiver transmits the uplink data based on information such as the time-domain position and frequency-domain position for transmitting uplink data. Before transmitting the uplink data, the main transceiver can be kept in the non-wake-up state as much as possible, thereby saving more power.

If the first information includes configuration information for transmitting uplink control signaling, where the uplink control signaling is used to feed back whether downlink data is received, the main transceiver monitors the uplink control signaling based on information such as the time-domain position and frequency-domain position for transmitting uplink control signaling. By receiving the configuration information in advance, the main transceiver can remain in the non-wake-up state for a longer time, thereby reducing the power consumption of the electronic device.

If the first information includes synchronization information for synchronization, the electronic device enables the main transceiver to achieve time-frequency synchronization with the wireless network based on the synchronization information for time-domain synchronization and/or the synchronization information for frequency-domain synchronization, so that the main transceiver does not need to perform time-frequency synchronization after being woken up.

If the synchronization information for synchronization includes at least one of cell ID, transmission cycle of synchronization signal, time-frequency resource position, RE density, port, transmission power, QCL information, or information indicating one or more available reference signals, the main transceiver achieves time-frequency synchronization with the wireless network according to the above information, so that the main transceiver does not need to perform time-frequency synchronization after being woken up.

If the first information includes configuration information for receiving the second energy-saving signal, the main transceiver monitors or receives the second energy-saving signal based on information such as the time-domain position and frequency-domain position for receiving the second energy-saving signal. By receiving the configuration information in advance, the main transceiver can remain in the non-wake-up state for a longer time, thereby reducing the power consumption of the electronic device.

If the first information includes capability information of the wireless network, the main transceiver communicates with the wireless network based on information such as the code rate supported by the wireless network and the MCS supported by the wireless network, for example, communicating with the wireless network at a code rate of 128 kbits per second. Therefore, the main transceiver does not need to read other content such as beacon frame(s) to obtain the capability information after being woken up, reducing the power consumption of the electronic device.

In a case that the first information includes Physical Random Access Channel (PRACH) configuration information, the first receiver receives the configuration information, and the main transceiver transmits the random access preamble based on the configuration information after being woken up, without the need to receive the configuration information again, thereby reducing access latency and improving access efficiency.

In a case that the first information includes information related to the waveform used for communication, the first receiver receives the waveform-related information, and the main transceiver determines the waveform for transmitting and receiving signals based on the information after being woken up, without the need to receive the waveform-related information again, which prolongs the duration that the main transceiver remains in the non-wake-up state and thus reduces the power consumption of the electronic device.

In a case that the first information includes information related to the subcarrier spacing used for communication, the first receiver receives the subcarrier spacing-related information, and the main transceiver determines the slot duration based on the information after being woken up, without the need to receive the subcarrier spacing-related information again, which prolongs the duration that the main transceiver remains in the non-wake-up state and thus reduces the power consumption of the electronic device.

In a case that the first information includes operator-related information, the first receiver receives the operator-related information, and the main transceiver determines the currently used cell and base station system based on information such as the cell ID and Base Station System ID (BSS-ID) after being woken up, without the need to receive the operator-related information again, which prolongs the duration that the main transceiver remains in the non-wake-up state and thus reduces the power consumption of the electronic device.

In a case that the first information includes configuration information of the paging message, the first receiver receives the configuration information of the paging message, and the main transceiver is woken up at the paging occasion according to the configuration information and performs paging based on the information after being woken up, without the need to receive the configuration information of the paging message again, which prolongs the duration that the main transceiver remains in the non-wake-up state and thus reduces the power consumption of the electronic device.

After receiving the first information, the electronic device uses the main transceiver to establish a connection or association with the network and then performs communication. The main transceiver adopts communication protocols in the related art, such as 802.11b and 802.11n, enabling the electronic device to communicate with network devices in the related art (e.g., Access Points (APs)).

In summary, the method according to this embodiment receives the first information through the first receiver, where the first information is used for communication between the electronic device and the wireless network. This eliminates the need for the main transceiver to read the first information from a beacon frame(s) after being woken up, thereby helping the electronic device quickly establish a connection with the wireless network.

The method according to this embodiment further receives the second energy-saving signal through the first receiver after the first receiver is woken up. The first receiver demodulates the second energy-saving signal and transmits the corresponding content to the main transceiver. Since the operating power consumption of the first receiver is lower than the operating power consumption of the main transceiver, the power consumption of the electronic device is reduced.

The method according to this embodiment further monitors the second energy-saving signal based on the Discontinuous Reception (DRX) cycle. Using the main transceiver based on the DRX mechanism consumes less power than using the first receiver, and there is no need to use the first receiver, which decouples the first receiver from the main transceiver and thus adapts to different application scenarios.

Since the operating power consumption of the first receiver is lower than that of the main transceiver, the first receiver receiving information for communication between the first receiver and the wireless network can reduce the power consumption of the electronic device compared with using the main transceiver to receive the above information.

In some embodiments, the first information includes: information used for communication between the first receiver and the wireless network.

In some embodiments, the first information includes at least one of the following:
configuration information for receiving downlink data;
configuration information for receiving downlink control signaling;
configuration information for receiving system broadcast;
synchronization information for synchronization;
configuration information for receiving the first energy-saving signal;
configuration information for receiving the second energy-saving signal;
capability information of the wireless network;
configuration information for random access;
operator-related information;
configuration information of the paging message.

The first energy-saving signal is used to indicate whether to wake up the first receiver; the second energy-saving signal is used to indicate whether to wake up the main transceiver.

In some embodiments, the configuration information for receiving downlink data includes at least one of the following: time-domain position for receiving downlink data, frequency-domain position for receiving downlink data, cycle for receiving downlink data, etc.

In some embodiments, the configuration information for receiving downlink control signaling includes at least one of the following: time-domain position for receiving downlink control signaling, frequency-domain position for receiving downlink control signaling, control resource set for monitoring downlink control signaling, search space set for monitoring downlink control signaling, Radio-Network Temporary Identifier (RNTI) for monitoring downlink control signaling, etc.

In some embodiments, the configuration information for receiving downlink control signaling includes: information indicating Physical Downlink Control Channel (PDCCH) monitoring.

In some embodiments, the information indicating PDCCH monitoring includes at least one of the following:
configuration information of a PDCCH search space set;
configuration information of a PDCCH search space set group;
PDCCH skipping information.

A PDCCH search space set group includes at least one PDCCH search space set. A PDCCH search space set or a PDCCH search space set group is used to indicate PDCCH monitoring occasions. PDCCH skipping information is used to indicate PDCCH monitoring is not to be performed at one or more specified PDCCH monitoring occasions or within a specified time period.

For specific details of the PDCCH search space sets, PDCCH search space set groups, and PDCCH skipping information, refer to the above embodiments, which will not be repeated here.

In some embodiments, the configuration information for receiving system broadcast includes at least one of the following: time-domain position of broadcast frames, frequency-domain position of broadcast frames, broadcast cycle of broadcast frames, etc.

In some embodiments, the configuration information for receiving system broadcast includes: information related to system parameters.

In some embodiments, the information related to system parameters includes at least one of the following:
configuration information of system bandwidth;
configuration information of subcarrier spacing;
configuration information of access class barring;
configuration information of cell barring.

In some embodiments, the synchronization information for synchronization includes at least one of the following: synchronization information for time-domain synchronization, synchronization information for frequency-domain synchronization, etc., which helps the first receiver achieve time-frequency synchronization with the wireless network, so that the main transceiver does not need to perform time-frequency synchronization again after being woken up.

In some embodiments, the synchronization information includes at least one of the following:
configuration information of cell ID;
configuration information of the transmission cycle of synchronization signal;
configuration information of the time-frequency resource position of synchronization signal;
configuration information of the Resource Element (RE) density of synchronization signal;
configuration information of the ports of synchronization signal;
configuration information of the transmission power of synchronization signal;
Quasi Co-Located (QCL) information of synchronization signal;
Information indicating one or more available reference signals.

In some embodiments, the signal carrying the synchronization information may be at least one of a Primary Synchronization Signal (PSS), a Secondary Synchronization Signal (SSS), a Channel-State Information Reference Signal (CSI-RS), and a Tracking Reference Signal (TRS).

In some embodiments, the information indicating one or more available reference signals includes an indication of one or more available reference signals and/or one or more unavailable reference signals. For example, the network device configures multiple reference signals for the electronic device, and uses a bit bitmap in the second energy-saving signal to indicate which of these multiple reference signals are available and/or unavailable. For instance, the bitmap "10010" indicates five reference signals, where "1" indicates that a reference signal is available and "0" indicates that a reference signal is unavailable, i.e., the first and fourth reference signals are available, while the second, third, and fifth reference signals are unavailable; alternatively, "0" indicates that a reference signal is available and "1" indicates that a reference signal is unavailable, i.e., the second, third, and fifth reference signals are available, while the first and fourth reference signals are unavailable.

In some embodiments, the information indicating one or more available reference signals includes an indication of the usage duration of the available reference signals.

In some embodiments, the configuration information for receiving the first energy-saving signal includes at least one of the following: time-domain position for receiving the first energy-saving signal, frequency-domain position for receiving the first energy-saving signal, etc. The first energy-saving signal is a signal used to indicate whether to wake up the first receiver.

In some embodiments, the configuration information for receiving the second energy-saving signal includes at least one of the following: time-domain position for receiving the second energy-saving signal, frequency-domain position for receiving the second energy-saving signal, etc.

In some embodiments, the capability information of the wireless network includes at least one of the following: code rates supported by the wireless network, Modulation and Coding Scheme (MCS) supported by the wireless network, etc. Such information is generally carried in beacon frames, so the main transceiver does not need to read beacon frames after being woken up, reducing the power consumption of the electronic device.

In some embodiments, the configuration information for random access includes: PRACH configuration information.

In some embodiments, the PRACH configuration information includes at least one of the following:
configuration information of the time-frequency resource position of PRACH Occasions (ROs);
configuration information of a random access preamble index;
configuration information of a PRACH configuration index.

For specific details of the PRACH configuration information, refer to the above embodiments, which will not be repeated here.

In some embodiments, the operator-related information includes at least one of the following:
Information related to the Public Land Mobile Network (PLMN);
Information related to the Tracking Area ID;
Information related to the Cell-ID;
Information related to the Base Station System ID (BSS-ID).

In some embodiments, the configuration information of the paging message includes at least one of the following:
configuration information of paging frames;
configuration information of paging occasions.

The paging frame and paging occasion are information related to the mechanism for initiating calls or other notifications to the electronic device. A paging frame is a time window used to transmit paging information, while a paging occasion is a specific time point within this time window for performing paging.

It should be noted that the examples of the foregoing information are not intended to limit the first information. The aforementioned first information may have different names or definitions in different wireless networks. For example, system information broadcast configuration information is adopted in cellular networks, and beacon frame broadcast configuration information is adopted in WiFi networks, and so on, which will not be elaborated here.

In some embodiments, the first receiver communicates with the wireless network based on the content carried by the first information.

For example, in a case that the first information includes configuration information for receiving downlink data, the first receiver receives the downlink data based on information such as the time-domain position and frequency-domain position for receiving downlink data.

In a case that the first information includes configuration information for receiving downlink control signaling, where the downlink control signaling is used to indicate information related to receiving downlink data, the first receiver monitors the downlink control signaling based on information such as the time-domain position and frequency-domain position for receiving downlink control signaling, and receives the downlink data according to the information related to receiving downlink data indicated by the downlink control signaling, so as to communicate with the wireless network.

In a case that the first information includes configuration information for receiving system broadcast, the first receiver receives the system broadcast of the wireless network based on information such as the time-domain position and frequency-domain position of broadcast frames.

In a case that the first information includes synchronization information for synchronization, the first receiver achieves time-frequency synchronization with the wireless network based on the synchronization information for time-domain synchronization and/or the synchronization information for frequency-domain synchronization.

In a case that the first information includes configuration information for receiving the first energy-saving signal, the first receiver monitors or receives the first energy-saving signal based on information such as the time-domain position and frequency-domain position for receiving the first energy-saving signal.

In a case that the first information includes configuration information for receiving the second energy-saving signal, the first receiver monitors or receives the second energy-saving signal based on information such as the time-domain position and frequency-domain position for receiving the second energy-saving signal.

In a case that the first information includes capability information of the wireless network, the first receiver communicates with the wireless network based on information such as the code rate supported by the wireless network and the MCS supported by the wireless network, for example, communicating with the wireless network at a code rate of 8 kilobits per second.

In a case that the first information includes configuration information for random access, the first receiver transmits the random access preamble based on the PRACH configuration information, reducing access latency and improving access efficiency.

In a case that the first information includes operator-related information, the first receiver determines information such as the PLMN, Tracking Area ID, cell ID, and BSS-ID based on the operator-related information, so as to communicate with the wireless network.

In a case that the first information includes configuration information of the paging message, the first receiver determines the configuration information of paging frames and paging occasions based on the configuration information of the paging message, enabling the electronic device to identify and respond to paging messages, thereby communicating with the wireless network subsequently.

In some embodiments, taking the wireless network as a WiFi network as an example, the first information includes at least one of the following:
Network timestamp information for communication between the network device and the main transceiver;
Frequency position information of the communication channel used by the main transceiver for communication;
Time-domain position information of beacon frames;
Capability information of the wireless network;
Synchronization information for synchronization.

In a case that the first information includes network timestamp information for communication between the network device and the main transceiver, the electronic device obtains the timestamp information in advance through the first receiver, so that the main transceiver can obtain the network communication time without reading beacon frames after being woken up. The main transceiver may be equivalently understood as a main transceiver or a main air interface communication unit.

In a case that the first information includes frequency position information of the communication channel used by the main transceiver for communication, the electronic device adjusts its working channel to the frequency position, avoiding the need for the main transceiver to perform frequency scanning to obtain the frequency position of the working channel after being woken up.

In a case that the first information includes time-domain position information of beacon frames, the electronic device receives the beacon frames based on the time-domain position. For example, the electronic device turns off the main transceiver at the time-domain position for signal transmission of non-beacon frames; the electronic device turns on the main transceiver again at the time-domain position for beacon frame transmission, thereby reducing power consumption. Meanwhile, considering the clock deviation of the electronic device, the main transceiver can be turned on at a first time-domain position, which is a time-domain position with a time margin before the time-domain position for beacon frame transmission, and the time margin can be adjusted according to actual conditions.

In a case that the first information includes capability information of the wireless network, since the capability information of the wireless network is generally carried in beacon frames, the main transceiver can avoid reading beacon frames after being woken up, reducing the power consumption of the electronic device.

In a case that the first information includes synchronization information for synchronization, the first receiver achieves time-frequency synchronization with the wireless network, so that the main transceiver does not need to perform time-frequency synchronization again after being woken up.

In some embodiments, the first information includes downlink data, such as data whose data volume is lower than a first threshold, or data whose transmission latency requirement is lower than a first latency. The first threshold and the first latency are preset values or value ranges.

In some embodiments, the first information is received through the first receiver. The first receiver receives data whose data volume is lower than the first threshold, or data whose transmission latency requirement is lower than the first latency, without the need to use the main transceiver for reception, further reducing the power consumption of the electronic device.

In summary, the method according to this embodiment receives the first information through the first receiver, where the first information is used for communication between the electronic device and the wireless network, and communicates with the wireless network through the first receiver without using the main transceiver, thereby saving the power of the electronic device.

FIG. 11 is a flowchart of an information transmission method provided by an exemplary embodiment of the present disclosure. The method is executed by a network device or an energy supply node, and includes the following operations.

At operation 1110, first information is transmitted to a first receiver.

In some embodiments, an electronic device includes the first receiver and a main transceiver, where an operating power consumption of the first receiver is lower than an operating power consumption of the main transceiver, and the first information is used for communication between the electronic device and a wireless network.

In some embodiments, the first information is transmitted to the first receiver in a case that the first receiver is in a wake-up state.

In some embodiments, the first information includes: information used for communication between the first receiver and the wireless network.

In some embodiments, the first information includes at least one of the following:
configuration information for receiving downlink data;
configuration information for receiving downlink control signaling;
configuration information for receiving system broadcast;
synchronization information for synchronization;
configuration information for receiving a first energy-saving signal;
configuration information for receiving a second energy-saving signal;
capability information of the wireless network;
configuration information for random access;
operator-related information; or
configuration information of a paging message.

The first energy-saving signal is used to indicate whether to wake up the first receiver; the second energy-saving signal is used to indicate whether to wake up the main transceiver.

In some embodiments, the first information includes: information used for communication between the main transceiver and the wireless network.

In some embodiments, the first information includes at least one of the following:
configuration information for receiving downlink data;
configuration information for receiving downlink control signaling;
configuration information for receiving system broadcast;
configuration information for transmitting uplink data;
configuration information for transmitting uplink control signaling;
synchronization information for synchronization;
configuration information for receiving a second energy-saving signal;
capability information of the wireless network;
configuration information for random access;
information related to a waveform used for communication;
information related to subcarrier spacing used for communication;
operator-related information; or
configuration information of a paging message.

The second energy-saving signal is used to indicate whether to wake up the main transceiver.

In some embodiments, the configuration information for receiving downlink control signaling includes: information indicating Physical Downlink Control Channel (PDCCH) monitoring.

In some embodiments, the information indicating PDCCH monitoring includes at least one of the following:
configuration information of a PDCCH search space set;
configuration information of a PDCCH search space set group; or
PDCCH skipping information.

A PDCCH search space set group includes at least one PDCCH search space set. A PDCCH search space set or a PDCCH search space set group is used to indicate PDCCH monitoring occasions. PDCCH skipping information is used to indicate PDCCH monitoring is not to be performed at one or more specified PDCCH monitoring occasions or within a specified time period.

In some embodiments, the configuration information for random access includes: Physical Random Access Channel (PRACH) configuration information.

In some embodiments, the PRACH configuration information includes at least one of the following:
configuration information of a time-frequency resource position of a PRACH Occasion (RO);
configuration information of a random access preamble index; or
configuration information of a PRACH configuration index.

In some embodiments, the configuration information for receiving system broadcast includes: information related to one or more system parameters.

In some embodiments, the information related to one or more system parameters includes at least one of the following:
configuration information of system bandwidth;
configuration information of subcarrier spacing;
configuration information of access class barring; or
configuration information of cell barring.

In some embodiments, the synchronization information for synchronization includes at least one of the following:
configuration information of a cell Identifier (ID);
configuration information of a transmission cycle of a synchronization signal;
configuration information of time-frequency resource positions of the synchronization signal;
configuration information of a Resource Element (RE) density of the synchronization signal;
configuration information of a port of the synchronization signal;
configuration information of a transmission power of the synchronization signal;
Quasi Co-Location (QCL) information of the synchronization signal; or
information used to indicate one or more available reference signals.

In some embodiments, the operator-related information includes at least one of the following:
information related to a Public Land Mobile Network (PLMN);
information related to a Tracking Area ID;
information related to a Cell ID; or
information related to a Base Station System ID.

In some embodiments, the configuration information of a paging message includes at least one of the following:
configuration information of a Paging Frame (PF); or
configuration information of a Paging Occasion (PO).

In some embodiments, the first information is transmitted via one or more data frames; or, the first information is transmitted via one or more beacon frames.

In some embodiments, the electronic device communicates with the wireless network based on the first information in a case that the main transceiver is in a wake-up state.

For specific implementation details of the aforementioned information transmission method, refer to the embodiment shown in FIG. 8, which will not be repeated here.

In summary, the method according to this embodiment transmits the first information to the first receiver, where the first information is used for communication between the electronic device and the wireless network. This eliminates the need for the main transceiver of the electronic device to read the first information from beacon frames after being woken up, thereby helping the electronic device quickly establish a connection with the wireless network.

FIG. 12 is a flowchart of an information transmission method according to an exemplary embodiment of the present disclosure. The method is executed by a network device or an energy supply node, and includes the following operations.

At operation 1110, first information is transmitted to a first receiver.

For specific implementation details, refer to operation 1110 in the embodiment shown in FIG. 11, which will not be repeated here.

At operation 1120, a second energy-saving signal is transmitted.

The second energy-saving signal is used to indicate whether to wake up the main transceiver.

In some embodiments, the second energy-saving signal is transmitted to the first receiver after the first receiver is woken up.

In some embodiments, the second energy-saving signal is a signal received by the electronic device via the main transceiver.

In some embodiments, the second energy-saving signal is a signal monitored by the electronic device based on a Discontinuous Reception (DRX) cycle; if the second energy-saving signal associated with a first DRX cycle is detected, the main transceiver is kept in a wake-up state or a non-wake-up state during the active time period of the first DRX cycle according to the indication of the second energy-saving signal associated with the first DRX cycle.

In some embodiments, the first information is carried in the second energy-saving signal.

In some embodiments, the electronic device is a passive device.

In some embodiments, the electronic device is an active device.

In some embodiments, the electronic device includes an energy harvesting module configured to harvest ambient energy from the environment, and the ambient energy is used to power the first receiver.

For specific implementation details of the aforementioned information transmission method, refer to the embodiment shown in FIG. 10, which will not be repeated here.

In summary, in the method according to this embodiment, the first information is transmitted to the first receiver, where the first information is used for communication between the electronic device and the wireless network. This eliminates the need for the main transceiver of the electronic device to read the first information from a beacon frame(s) after being woken up, thereby helping the electronic device quickly establish a connection with the wireless network.

The method according to this embodiment further transmits the second energy-saving signal, which is used to indicate whether to wake up the main transceiver. The main transceiver receives the second energy-saving signal based on the DRX mechanism, thereby reducing the power consumption of the electronic device and extending the battery life.

In the aforementioned embodiments, operations with the same sequence numbers may be regarded as the same operation. The embodiment corresponding to FIG. 8, the embodiment corresponding to FIG. 10, the embodiment corresponding to FIG. 11, and the embodiment corresponding to FIG. 12 may be implemented independently or in combination, which is not limited in the present disclosure.

FIG. 13 is a block diagram of an electronic device provided by an exemplary embodiment of the present disclosure. The apparatus may be implemented as an electronic device or a part of an electronic device through software, hardware, or a combination of both. The apparatus includes a first receiver and a main transceiver, where an operating power consumption of the first receiver is lower than an operating power consumption of the main transceiver. The apparatus includes a first receiving module 1310, a communication module 1320, and a second receiving module 1330.

The first receiving module 1310 is configured to receive first information via the first receiver.

The first information is used for communication between the electronic device and a wireless network. The wireless network includes at least one of a WiFi network, a cellular network, or a wireless energy supply network.

In a possible design of this embodiment, the first receiving module 1310 is configured to receive the first information via the first receiver in a case that the first receiver is in a wake-up state.

In a possible design of this embodiment, being in a wake-up state includes at least one of the following:
being always in a wake-up state;
being in a wake-up state periodically; or
entering a wake-up state after receiving a first energy-saving signal.

The first energy-saving signal is used to indicate whether to wake up the first receiver. This design uses the scenario where the first receiver is always in a wake-up state as an example for illustration.

In a possible design of this embodiment, the first information includes: information used for communication between the first receiver and the wireless network.

In a possible design of this embodiment, the electronic device is an active device, which refers to a device with its own power supply and the capability of actively generating and transmitting signals, such as a mobile phone, a computer, a smart watch, a smart band, etc.

In a possible design of this embodiment, the electronic device is a passive device, which refers to a device that does not require a power supply or can operate by receiving energy from other devices, and may be referred to as a zero-power-consumption device, a low-power-consumption device, etc. The zero-power-consumption device may be implemented as at least one of a zero-power-consumption device or a zero-power-consumption terminal, or a part of at least one of a zero-power-consumption device or a zero-power-consumption terminal. The low-power-consumption device may be implemented as at least one of a low-power-consumption device or a low-power-consumption terminal, or a part of at least one of a low-power-consumption device or a low-power-consumption terminal.

In a possible design of this embodiment, the electronic device obtains energy from the environment and may be referred to as an ambient energy IoT device.

In a possible design of this embodiment, the electronic device is deployed at a fixed location and may be referred to as a zero-power-consumption device, a low-power-consumption device, etc. The zero-power-consumption device may be implemented as a zero-power-consumption station or a part of a zero-power-consumption station. The low-power-consumption device may be implemented as a low-power-consumption station or a part of a low-power-consumption station.

In a possible design of this embodiment, in a case that the first receiver is in a wake-up state, a network device or the energy supply node 630 in the embodiment shown in FIG. 6 transmits the first information to the first receiver. The first information may be referred to as auxiliary information, which helps the electronic device quickly establish a connection with the wireless network and complete communication after waking up the main transceiver.

In a possible design of this embodiment, the first information includes: information used for communication between the main transceiver and the wireless network. Equivalently, the first information may be understood as including information used for communication between the main transceiver (or main air interface communication unit) and the wireless network.

In a possible design of this embodiment, the content related to the first information may be applied when the electronic device is in a Radio Resource Control CONNECTED (RRC CONNECTED) state, or after the electronic device is associated with a network device.

In a possible design of this embodiment, the first information includes, but is not limited to, at least one of the following:
configuration information for receiving downlink data;
configuration information for receiving downlink control signaling;
configuration information for receiving system broadcast;
configuration information for transmitting uplink data;
configuration information for transmitting uplink control signaling;
synchronization information for synchronization;
configuration information for receiving a second energy-saving signal;
capability information of the wireless network;
configuration information for random access;
information related to a waveform used for communication;
information related to subcarrier spacing used for communication;
operator-related information; or
configuration information of a paging message.

The second energy-saving signal is used to indicate whether to wake up the main transceiver.

In a possible design of this embodiment, the configuration information for receiving downlink data includes at least one of the following: a time-domain position for receiving downlink data, a frequency-domain position for receiving downlink data, a cycle for receiving downlink data, etc.

In a possible design of this embodiment, the configuration information for receiving downlink control signaling includes at least one of the following: a time-domain position for receiving downlink control signaling, a frequency-domain position for receiving downlink control signaling, a control resource set for monitoring downlink control signaling, a search space set for monitoring downlink control signaling, or a Radio-Network Temporary Identifier (RNTI) for monitoring downlink control signaling, etc.

In a possible design of this embodiment, the configuration information for receiving downlink control signaling includes: information indicating PDCCH monitoring.

In a possible design of this embodiment, the information indicating PDCCH monitoring includes at least one of the following:
configuration information of a PDCCH search space set;
configuration information of a PDCCH search space set group; or
PDCCH skipping information.

A PDCCH search space set group includes at least one PDCCH search space set. A PDCCH search space set or a PDCCH search space set group is used to indicate PDCCH monitoring occasions. PDCCH skipping information is used to indicate PDCCH monitoring is not to be performed at one or more specified PDCCH monitoring occasions or within a specified time period.

Regarding PDCCH search space sets and PDCCH search space set groups:
The electronic device is configured with multiple PDCCH search space sets or PDCCH search space set groups. When configured with PDCCH search space set groups, each PDCCH search space set group includes at least one PDCCH search space set. PDCCH search space set group switch is used to indicate a PDCCH search space set or a PDCCH search space set group.

In a possible design of this embodiment, different PDCCH search space sets (or PDCCH search space set groups) correspond to different densities of PDCCH monitoring occasions in the time domain.

For example, when two PDCCH search space set groups are configured, the first PDCCH search space set group corresponds to a sparse density of PDCCH monitoring occasions, and the second PDCCH search space set group corresponds to a dense density of PDCCH monitoring occasions. A sparse density of PDCCH monitoring occasions means that the density is less than a first density threshold, while a dense density means that the density is greater than a second density threshold. The first density threshold and the second density threshold are preset and may be the same or different.

When the electronic device has few communication services, the electronic device can use the first PDCCH search space set group to monitor network scheduling. Since the density of PDCCH monitoring occasions is low, the number of monitoring times is small, which can decrease the power consumption of the electronic device.

When the electronic device has many communication services, the electronic device can use the second PDCCH search space set group to monitor network scheduling. Due to the high density of PDCCH monitoring occasions, the number of monitoring times is large, enabling the electronic device to receive data in a timely manner and achieve fast data transmission.

In a possible design of this embodiment, different indexes of PDCCH search space sets indicate respective PDCCH search space sets, the indexes of the PDCCH search space sets are preconfigured by the network device for the electronic device.

In a possible design of this embodiment, respective PDCCH search space set groups are indicated by different index numbers of PDCCH search space set groups, which are preconfigured by the network device for the electronic device.

Regarding PDCCH skipping information:
In a possible design of this embodiment, the network device needs to provide services to multiple electronic devices simultaneously. When an electronic device monitors the PDCCH based on a PDCCH search space set, there may be PDCCH monitoring occasions during which the network device does not transmit a PDCCH to the electronic device. During these PDCCH monitoring occasions, the network device may be scheduling other electronic devices. To reduce the power consumption of the electronic device, the network device transmits PDCCH skipping information to the electronic device, indicating that the electronic device does not need to monitor the PDCCH at specified PDCCH monitoring occasion(s) or within a specified time period.

In a possible design of this embodiment, the PDCCH skipping information may also be referred to as PDCCH monitoring skipping information or PDCCH monitoring ignoring information.

In a possible design of this embodiment, the configuration information for receiving system broadcast includes at least one of the following: a time-domain position of broadcast frames, a frequency-domain position of broadcast frames, a broadcast cycle of broadcast frames, or etc.

In a possible design of this embodiment, the configuration information for receiving system broadcast includes: information related to one or more system parameters.

In a possible design of this embodiment, the information related to one or more system parameters includes at least one of the following:
configuration information of system bandwidth;
configuration information of subcarrier spacing;
configuration information of access class barring; or
configuration information of cell barring.

In a possible design of this embodiment, the configuration information for transmitting uplink data includes at least one of the following: a time-domain position for transmitting uplink data, a frequency-domain position for transmitting uplink data, a cycle for transmitting uplink data, or etc.

In a possible design of this embodiment, the configuration information for transmitting uplink control signaling includes at least one of the following: a time-domain position for transmitting uplink control signaling, a frequency-domain position for transmitting uplink control signaling, or etc.

In a possible design of this embodiment, the synchronization information for synchronization includes at least one of the following: synchronization information for time-domain synchronization, synchronization information for frequency-domain synchronization, or etc., which helps the first receiver achieve time-frequency synchronization with the wireless network.

In a possible design of this embodiment, the synchronization information includes at least one of the following:
configuration information of a cell identity (ID);
configuration information of a transmission cycle of a synchronization signal;
configuration information of a time-frequency resource position of the synchronization signal;
configuration information of a resource element (RE) density of the synchronization signal;
configuration information of a port of the synchronization signal;
configuration information of a transmission power of the synchronization signal;
Quasi Co-Located (QCL) information of the synchronization signal; or
information indicating one or more available reference signals.

In a possible design of this embodiment, the signal carrying the synchronization information may be at least one of a Primary Synchronization Signal (PSS), a Secondary Synchronization Signal (SSS), a Channel-State Information Reference Signal (CSI-RS), or a Tracking Reference Signal (TRS).

In a possible design of this embodiment, the information indicating one or more available reference signals includes an indication of one or more available reference signals and/or one or more unavailable reference signals. For example, the network device configures multiple reference signals for the electronic device, and uses a bit bitmap in the second energy-saving signal to indicate which of these multiple reference signals are available and/or unavailable. For instance, the bitmap "10010" indicates five reference signals, where "1" indicates that a reference signal is available and "0" indicates that a reference signal is unavailable, i.e., the first and fourth reference signals are available, while the second, third, and fifth reference signals are unavailable; alternatively, "0" indicates that a reference signal is available and "1" indicates that a reference signal is unavailable, i.e., the second, third, and fifth reference signals are available, while the first and fourth reference signals are unavailable.

In a possible design of this embodiment, the information indicating one or more available reference signals includes an indication of the usage duration of the available reference signal(s).

In a possible design of this embodiment, the configuration information for receiving the second energy-saving signal includes at least one of the following: a time-domain position for receiving the second energy-saving signal, or a frequency-domain position for receiving the second energy-saving signal, etc. The second energy-saving signal is used to indicate whether to wake up the main transceiver.

In a possible design of this embodiment, the capability information of the wireless network includes at least one of the following: a code rate supported by the wireless network, a Modulation and Coding Scheme (MCS) supported by the wireless network, or etc. Such information is generally carried in a beacon frame(s).

In a possible design of this embodiment, the configuration information for random access includes: PRACH configuration information.

In a possible design of this embodiment, the PRACH configuration information includes at least one of the following:
configuration information of a time-frequency resource position of a PRACH Occasion (RO);
configuration information of a random access preamble index; or
configuration information of a PRACH configuration index.

In a case that the electronic device is in the Radio Resource Control idle (RRC idle) state or the Radio Resource Control inactive (RRC inactive) state, the electronic device, after being woken up, needs to initiate a random access procedure to establish an RRC connection and communicate with the wireless network. To accelerate the random access procedure, the configuration information for random access includes configuration information of PRACH, such as configuration information of a time-frequency resource position of an RO, configuration information of an RO index, or configuration information of a time interval (RO timing) between RO and the second energy-saving signal; and/or configuration information of a random access preamble index, or configuration information of a random access preamble index set; and/or configuration information of a PRACH configuration index (different PRACH configuration indexes correspond to different PRACH cycles, PRACH slots, starting symbol positions within slots, random access preamble formats, subcarrier spacings, etc.).

In a possible design of this embodiment, the information related to the waveform used for communication includes at least one of the following:
Orthogonal Frequency Division Multiplexing (OFDM);
Discrete Fourier Transform Spread OFDM (DFTS-OFDM); or
Direct Sequence Spread Spectrum (DSSS).

The waveform used for communication is applied to the DownLink (DL) and/or UpLink (UL) of the communication between the main transceiver and the wireless network.

In a possible design of this embodiment, the information related to subcarrier spacing used for communication is applied to the DL and/or UL of the communication between the main transceiver and the wireless network. Examples of subcarrier spacing include 15 KHz, 30 KHz, 60 KHz, 120 KHz, 312.5 KHz, 31.25 KHz, etc.

In a possible design of this embodiment, the operator-related information includes at least one of the following:
Information related to a Public Land Mobile Network (PLMN);
Information related to a Tracking Area ID;
Information related to a Cell-ID; or
Information related to a Base Station System ID (BSS-ID).

In a possible design of this embodiment, the configuration information of a paging message includes at least one of the following:
configuration information of PFs; or
configuration information of POs.

The paging frames and paging occasions are information related to the mechanism for initiating calls or other notifications to the electronic device. A paging frame is a time window used to transmit paging information, while a paging occasion is a specific time point within this time window for performing paging.

It should be noted that the examples of the foregoing information are not intended to limit the first information. The aforementioned first information may have different names or definitions in different wireless networks. For example, system information broadcast configuration information is adopted in the cellular network, and beacon frame broadcast configuration information is adopted in the WiFi network, and so on, which will not be elaborated here.

In a possible design of this embodiment, the form of the aforementioned frequency position includes: channel form, bandwidth form, carrier form, and etc. For example, downlink data is received on a first channel.

In a possible design of this embodiment, the information related to the frequency position enables the electronic device to obtain, via the first receiver, the frequency position for communication between the main transceiver and the wireless network, avoiding the main transceiver from performing frequency scanning to acquire the frequency position after being woken up, thereby reducing power consumption.

In a possible design of this embodiment, the first information is transmitted via one or more data frames; alternatively, the first information is transmitted via one or more beacon frames.

In a possible design of this embodiment, the network device transmits the first information first, followed by the transmission of the second energy-saving signal.

In a possible design of this embodiment, the first information is carried in the second energy-saving signal.

After waking up the first receiver, the network device transmits the second energy-saving signal. By receiving the second energy-saving signal, the electronic device can simultaneously obtain at least one of the first information, information indicating whether to wake up the main transceiver, or synchronization information for synchronization.

In a possible design of this embodiment, the communication module 1320 is configured to communicate with the wireless network based on the first information in a case that the main transceiver is in a wake-up state.

In a case that the main transceiver is in a wake-up state, the electronic device obtains the configuration of the wireless network based on the content carried in the first information.

For example, in a case that the first information includes configuration information for receiving downlink data, the main transceiver receives downlink data based on information such as the time-domain position for receiving downlink data and the frequency position for receiving downlink data. Before receiving downlink data, the main transceiver can be kept in a non-wake-up state as much as possible, thereby achieving higher power efficiency.

In a case that the first information includes configuration information for receiving downlink control signaling, where the downlink control signaling is used to indicate information related to receiving downlink data, the main transceiver monitors the downlink control signaling based on information such as the time-domain position for receiving downlink control signaling and the frequency position for receiving downlink control signaling, and receives downlink data according to the information related to receiving downlink data indicated by the downlink control signaling, so as to communicate with the wireless network. By receiving the configuration information in advance, the duration during which the main transceiver remains in a non-wake-up state is prolonged, thereby reducing the power consumption of the electronic device.

In a case that the first information includes configuration information for receiving system broadcast, the main transceiver receives system broadcast of the wireless network based on information such as the time-domain position of broadcast frames and the frequency position of broadcast frames. By receiving the configuration information for system broadcast in advance, the main transceiver can be kept in a non-wake-up state during the phases of receiving system broadcast and acquiring configuration information in the system broadcast, thus achieving higher power efficiency.

In a case that the configuration information for receiving system broadcast includes information related to system parameters, the first receiver receives configuration information of at least one of system bandwidth, subcarrier spacing, access class barring, or cell barring in advance. Based on the configuration information for receiving system broadcast, the main transceiver remains in a non-wake-up state during the phases of receiving system broadcast and acquiring configuration information in the system broadcast, thereby achieving higher power efficiency.

In a case that the first information includes configuration information for transmitting uplink data, the main transceiver transmits uplink data based on information such as the time-domain position for transmitting uplink data and the frequency position for transmitting uplink data. Before transmitting uplink data, the main transceiver can be kept in a non-wake-up state as much as possible, thus achieving higher power efficiency.

In a case that the first information includes configuration information for transmitting uplink control signaling, where the uplink control signaling is used to feed back whether downlink data has been received, the main transceiver monitors the uplink control signaling based on information such as the time-domain position for transmitting uplink control signaling and the frequency position for transmitting uplink control signaling. By receiving the configuration information in advance, the duration during which the main transceiver remains in a non-wake-up state is prolonged, thereby reducing the power consumption of the electronic device.

In a case that the first information includes synchronization information for synchronization, the electronic device achieves time-frequency synchronization between the main transceiver and the wireless network based on synchronization information for time-domain synchronization and/or synchronization information for frequency-domain synchronization, thus eliminating the need for the main transceiver to perform time-frequency synchronization again after being woken up.

In a case that the synchronization information for synchronization includes at least one of cell ID, transmission cycle of synchronization signal, time-frequency resource position, RE density, port, transmission power, QCL information, or information indicating one or more available reference signals, the main transceiver achieves time-frequency synchronization with the wireless network according to the above information, thereby avoiding the main transceiver from performing time-frequency synchronization again after being woken up.

In a case that the first information includes configuration information for receiving the second energy-saving signal, the main transceiver monitors or receives the second energy-saving signal based on information such as the time-domain position for receiving the second energy-saving signal and the frequency position for receiving the second energy-saving signal. By receiving the configuration information in advance, the duration during which the main transceiver remains in a non-wake-up state is prolonged, thus reducing the power consumption of the electronic device.

In a case that the first information includes capability information of the wireless network, the main transceiver communicates with the wireless network based on information such as code rates supported by the wireless network and MCS supported by the wireless network, for example, communicating with the wireless network at a code rate of 128 kilobits per second. This eliminates the need for the main transceiver to read other content such as beacon frames to obtain the capability information after being woken up, reducing the power consumption of the electronic device.

In a case that the first information includes PRACH configuration information, the first receiver receives the configuration information, and the main transceiver transmits the random access preamble based on the configuration information after being woken up without the need of receiving the configuration information again, thereby reducing access latency and improving access efficiency.

In a case that the first information includes information related to a waveform used for communication, the first receiver receives the waveform-related information, and the main transceiver, after being woken up, determines the waveform for transmitting and receiving signals based on the information without the need of receiving the waveform-related information again, which prolongs the duration that the main transceiver remains in a non-wake-up state and thus reduces the power consumption of the electronic device.

In a case that the first information includes information related to subcarrier spacing used for communication, the first receiver receives the subcarrier spacing-related information, and the main transceiver, after being woken up, determines the slot duration based on the information without the need of receiving the subcarrier spacing-related information again, which prolongs the duration that the main transceiver remains in a non-wake-up state and thus reduces the power consumption of the electronic device.

In a case that the first information includes operator-related information, the first receiver receives the operator-related information, and the main transceiver, after being woken up, determines the currently used cell and base station system based on information such as cell ID and BSS-ID without the need of receiving the operator-related information again, which prolongs the duration that the main transceiver remains in a non-wake-up state and thus reduces the power consumption of the electronic device.

In a case that the first information includes configuration information of the paging message, the first receiver receives the configuration information of the paging message, and the main transceiver is woken up at the paging occasion according to the configuration information, and after being woken up, performs paging based on the information without the need of receiving the configuration information of the paging message again, which prolongs the duration that the main transceiver remains in a non-wake-up state and thus reduces the power consumption of the electronic device.

After receiving the first information, the electronic device uses the main transceiver to establish a connection or association with the network and then performs communication. The main transceiver adopts a communication protocol (e.g., 802.11b and 802.11n) in the related art, enabling the electronic device to communicate with a network device (e.g., AP) in the related art.

Since the operating power consumption of the first receiver is lower than that of the main transceiver, the first receiver receiving information for communication between the first receiver and the wireless network can reduce the power consumption of the electronic device compared with using the main transceiver to receive the above information.

In a possible design of this embodiment, the first information includes: information used for communication between the first receiver and the wireless network.

In a possible design of this embodiment, the first information includes at least one of the following:
configuration information for receiving downlink data;
configuration information for receiving downlink control signaling;
configuration information for receiving system broadcast;
synchronization information for synchronization;
configuration information for receiving the first energy-saving signal;
configuration information for receiving the second energy-saving signal;
capability information of the wireless network;
configuration information for random access;
operator-related information; or
configuration information of a paging message.

The first energy-saving signal is used to indicate whether to wake up the first receiver; the second energy-saving signal is used to indicate whether to wake up the main transceiver.

In a possible design of this embodiment, the configuration information for receiving downlink data includes at least one of the following: a time-domain position for receiving downlink data, a frequency position for receiving downlink data, a cycle for receiving downlink data, or etc.

In a possible design of this embodiment, the configuration information for receiving downlink control signaling includes at least one of the following: a time-domain position for receiving downlink control signaling, a frequency position for receiving downlink control signaling, control resource set for monitoring downlink control signaling, a search space set for monitoring downlink control signaling, a RNTI for monitoring downlink control signaling, or etc.

In a possible design of this embodiment, the configuration information for receiving downlink control signaling includes: information indicating PDCCH monitoring.

In a possible design of this embodiment, the information indicating PDCCH monitoring includes at least one of the following:
configuration information of a PDCCH search space set;
configuration information of a PDCCH search space set group; or
PDCCH skipping information.

A PDCCH search space set group includes at least one PDCCH search space set. A PDCCH search space set or a PDCCH search space set group is used to indicate PDCCH monitoring occasions. PDCCH skipping information is used to indicate PDCCH monitoring is not to be performed at one or more specified PDCCH monitoring occasions or within a specified time period.

For specific details of PDCCH search space sets, PDCCH search space set groups, and PDCCH skipping information, refer to the above embodiments, which will not be repeated here.

In a possible design of this embodiment, the configuration information for receiving system broadcast includes at least one of the following: a time-domain position of broadcast frames, a frequency position of broadcast frames, a broadcast cycle of broadcast frames, or etc.

In a possible design of this embodiment, the configuration information for receiving system broadcast includes: information related to one or more system parameters.

In a possible design of this embodiment, the information related to one or more system parameters includes at least one of the following:
configuration information of system bandwidth;
configuration information of subcarrier spacing;
configuration information of access class barring; or
configuration information of cell barring.

In a possible design of this embodiment, the synchronization information for synchronization includes at least one of the following: synchronization information for time-domain synchronization, synchronization information for frequency-domain synchronization, etc., which helps the first receiver achieve time-frequency synchronization with the wireless network, so that the main transceiver does not need to perform time-frequency synchronization again after being woken up.

In a possible design of this embodiment, the synchronization information includes at least one of the following:
configuration information of a cell Identifier (ID);
configuration information of a transmission cycle of a synchronization signal;
configuration information of time-frequency resource positions of the synchronization signal;
configuration information of a Resource Element (RE) density of the synchronization signal;
configuration information of a port of the synchronization signal;
configuration information of a transmission power of the synchronization signal;
Quasi Co-Location (QCL) information of the synchronization signal; or
information used to indicate one or more available reference signals.

In a possible design of this embodiment, the signal carrying the synchronization information may be at least one of PSS, SSS, CSI-RS, or TRS.

In a possible design of this embodiment, the information indicating one or more available reference signals includes an indication of one or more available reference signals and/or one or more unavailable reference signals. For example, the network device configures multiple reference signals for the electronic device, and uses a bit bitmap in the second energy-saving signal to indicate which of these multiple reference signals are available and/or unavailable. For instance, the bitmap "10010" indicates five reference signals, where "1" indicates that a reference signal is available and "0" indicates that a reference signal is unavailable, i.e., the first and fourth reference signals are available, while the second, third, and fifth reference signals are unavailable; alternatively, "0" indicates that a reference signal is available and "1" indicates that a reference signal is unavailable, i.e., the second, third, and fifth reference signals are available, while the first and fourth reference signals are unavailable.

In a possible design of this embodiment, the information indicating one or more available reference signals includes an indication of the usage duration of the available reference signal(s).

In a possible design of this embodiment, the configuration information for receiving the first energy-saving signal includes at least one of the following: a time-domain position for receiving the first energy-saving signal, a frequency position for receiving the first energy-saving signal, or etc. The first energy-saving signal is a signal used to indicate whether to wake up the first receiver.

In a possible design of this embodiment, the configuration information for receiving the second energy-saving signal includes at least one of the following: a time-domain position for receiving the second energy-saving signal, a frequency position for receiving the second energy-saving signal, or etc.

In a possible design of this embodiment, the capability information of the wireless network includes at least one of the following: a code rate supported by the wireless network, a MCS supported by the wireless network, or etc. Such information is generally carried in a beacon frame(s), so the main transceiver does not need to read beacon frames after being woken up, which reduces the power consumption of the electronic device.

In a possible design of this embodiment, the configuration information for random access includes: PRACH configuration information.

In a possible design of this embodiment, the PRACH configuration information includes at least one of the following:
configuration information of time-frequency resource positions of ROs;
configuration information of a random access preamble index; or
configuration information of a PRACH configuration index.

For specific details of the PRACH configuration information, refer to the above embodiments, which will not be repeated here.

In a possible design of this embodiment, the operator-related information includes at least one of the following:
information related to a Public Land Mobile Network (PLMN);
information related to a Tracking Area ID;
information related to a Cell ID; or
information related to a Base Station System ID.

In a possible design of this embodiment, the configuration information of a paging message includes at least one of the following:
configuration information of one or more paging frames; or
configuration information of one or more paging occasions.

The paging frame(s) and paging occasion(s) are information related to the mechanism for initiating calls or other notifications to the electronic device. A paging frame is a time window used to transmit paging information, while a paging occasion(s) is(are) a specific time point(s) within this time window for performing paging.

It should be noted that the examples of the foregoing information are not intended to limit the first information. The aforementioned first information may have different names or definitions in different wireless networks. For example, system information broadcast configuration information is adopted in cellular networks, and beacon frame broadcast configuration information is adopted in WiFi networks, and so on, which will not be elaborated here.

In a possible design of this embodiment, the first receiver communicates with the wireless network based on the content carried in the first information.

For example, in a case that the first information includes configuration information for receiving downlink data, the first receiver receives downlink data based on information such as the time-domain position for receiving downlink data and the frequency position for receiving downlink data.

In a case that the first information includes configuration information for receiving downlink control signaling, where the downlink control signaling is used to indicate information related to receiving downlink data, the first receiver monitors the downlink control signaling based on information such as the time-domain position for receiving downlink control signaling and the frequency position for receiving downlink control signaling, and receives downlink data according to the information related to receiving downlink data indicated by the downlink control signaling, so as to communicate with the wireless network.

In a case that the first information includes configuration information for receiving system broadcast, the first receiver receives system broadcast of the wireless network based on information such as the time-domain position of a broadcast frame(s) and the frequency position of a broadcast frame(s).

In a case that the first information includes synchronization information for synchronization, the first receiver achieves time-frequency synchronization with the wireless network based on synchronization information for time-domain synchronization and/or synchronization information for frequency-domain synchronization.

In a case that the first information includes configuration information for receiving the first energy-saving signal, the first receiver monitors or receives the first energy-saving signal based on information such as the time-domain position for receiving the first energy-saving signal and the frequency position for receiving the first energy-saving signal.

In a case that the first information includes configuration information for receiving the second energy-saving signal, the first receiver monitors or receives the second energy-saving signal based on information such as the time-domain position for receiving the second energy-saving signal and the frequency position for receiving the second energy-saving signal.

In a case that the first information includes capability information of the wireless network, the first receiver communicates with the wireless network based on information such as a code rate supported by the wireless network and a MCS supported by the wireless network, for example, communicating with the wireless network at a code rate of 8 kilobits per second.

In a case that the first information includes configuration information for random access, the first receiver transmits the random access preamble based on the PRACH configuration information, reducing access latency and improving access efficiency.

In a case that the first information includes operator-related information, the first receiver determines information such as PLMN, Tracking Area ID, cell ID, and BSS-ID based on the operator-related information, so as to communicate with the wireless network.

In a case that the first information includes configuration information of the paging message, the first receiver determines the configuration information of the paging frame(s) and paging occasion(s) based on the configuration information of the paging message, enabling the electronic device to identify and respond to paging messages, thereby communicating with the wireless network subsequently.

In a possible design of this embodiment, taking the wireless network as a WiFi network as an example, the first information includes at least one of the following:
timestamp information of the network when the network device communicates with the main transceiver;
frequency position information of the communication channel used by the main transceiver for communication;
time-domain position information of beacon frames;
capability information of the wireless network; or
synchronization information for synchronization.

In a case that the first information includes network timestamp information for communication between the network device and the main transceiver, the electronic device obtains the timestamp information in advance via the first receiver, so that the main transceiver, after being woken up, can obtain the network communication time without reading the beacon frame(s). The main transceiver may be equivalently understood as a main transceiver or a main air interface communication unit.

In a case that the first information includes the frequency position information of the communication channel used by the main transceiver for communication, the electronic device adjusts its working channel to the frequency position, avoiding the main transceiver from performing frequency scanning to obtain the frequency position of the working channel after being woken up.

In a case that the first information includes the time-domain position information of beacon frame(s), the electronic device receives the beacon frame(s) based on the time-domain position. For example, the electronic device turns off the main transceiver at the time-domain position for signal transmission of non-beacon frame(s); the electronic device turns on the main transceiver again at the time-domain position for beacon frame transmission, thereby reducing power consumption. Meanwhile, considering the clock deviation of the electronic device, the main transceiver can be turned on at a first time-domain position, which is a time-domain position with a time margin before the time-domain position for beacon frame transmission, and the time margin can be adjusted according to actual conditions.

In a case that the first information includes capability information of the wireless network, since the capability information of the wireless network is generally carried in the beacon frame(s), which can avoid the main transceiver from reading beacon frames after being woken up, thus reducing the power consumption of the electronic device.

In a case that the first information includes synchronization information for synchronization, the first receiver achieves time-frequency synchronization with the wireless network, so that the main transceiver does not need to perform time-frequency synchronization again after being woken up.

In a possible design of this embodiment, the first information includes downlink data, such as data of which a data volume is lower than a first threshold, or data of which a transmission latency requirement is lower than a first latency. The first threshold and the first latency are preset values or value ranges.

In a possible design of this embodiment, the first information is received via the first receiver. The first receiver receives data of which a data volume is lower than the first threshold, or data of which a transmission latency requirement is lower than the first latency, without using the main transceiver for reception, further reducing the power consumption of the electronic device.

In a possible design of this embodiment, the second receiving module 1330 is configured to receive the second energy-saving signal, which is used to indicate whether to wake up the main transceiver.

In a possible design of this embodiment, waking up the main transceiver may be equivalently understood as: waking up the main transceiver; or waking up the main air interface communication unit. The above three expressions have the same meaning in the embodiments of the present disclosure. In a possible design of this embodiment, waking up the main transceiver may also be equivalently understood as: monitoring the transmission of downlink data or data frames via the main transceiver; or monitoring the control channel for scheduling uplink data, downlink data, or data frames via the main transceiver. The above three expressions have the same meaning in the embodiments of the present disclosure.

In a possible design of this embodiment, not waking up the main transceiver may be equivalently understood as: keeping the main transceiver in an off state; or keeping the main transceiver in a DRX monitoring state. The above three expressions have the same meaning in the embodiments of the present disclosure.

In a possible design of this embodiment, the second energy-saving signal indicating wake-up differs from the second energy-saving signal indicating non-wake-up in at least one of the following aspects:
different waveforms;
different modulation schemes;
different sequence lengths;
different sequences;
different frequencies used;
different frequency ranges used; or
different values of carried information bits.

For example, the first energy-saving signal has a first sequence or a second sequence, where the first sequence is used to indicate waking up the first receiver, and the second sequence is used to indicate not waking up the first receiver. For instance, the first sequence is Zadoff-Chu sequence 1 for indicating waking up the first receiver, and the second sequence is Zadoff-Chu sequence 2 for indicating not waking up the first receiver, which is not limited in the embodiments of the present disclosure.

Another example is that the first energy-saving signal has a first sequence length or a second sequence length, where the first sequence length is used to indicate waking up the first receiver, and the second sequence length is used to indicate not waking up the first receiver. For instance, the first sequence length is 16 bits for indicating waking up the first receiver, and the second sequence length is 8 bits for indicating not waking up the first receiver; alternatively, the first sequence length is 8 bits for indicating waking up the first receiver, and the second sequence length is 16 bits for indicating not waking up the first receiver, which is not limited in the embodiments of the present disclosure.

In a possible design of this embodiment, the second receiving module 1330 is configured to receive the second energy-saving signal via the first receiver after the first receiver is woken up.

The first receiver, when woken up, receives the second energy-saving signal, demodulates the second energy-saving signal, and transmits the corresponding content to the main transceiver to indicate whether to wake up the main transceiver.

In a possible design of this embodiment, after the first receiver is woken up may be equivalently understood as: after the first receiver enters a state of monitoring the transmission of downlink data or data frames; or after the first receiver enters a state of monitoring the control channel for scheduling uplink data, downlink data, or data frames. The above three expressions have the same meaning in the embodiments of the present disclosure.

In a possible design of this embodiment, the first receiver monitors the second energy-saving signal based on a DRX cycle; if the second energy-saving signal associated with a first DRX cycle is detected, the main transceiver is kept in a wake-up state or a non-wake-up state during the active time period of the first DRX cycle according to the indication of the second energy-saving signal associated with the first DRX cycle.

The second energy-saving signal is transmitted in any one of the following two ways:
(1) The second energy-saving signal is always transmitted, and each second energy-saving signal carries a wake-up indication or a non-wake-up indication.
   The first receiver monitors the second energy-saving signal based on a DRX cycle; if the second energy-saving signal associated with the first DRX cycle is detected, the main transceiver is controlled to be in the wake-up state during the active time period of the first DRX cycle, according to the wake-up indication carried in the second energy-saving signal; or the main transceiver is kept in the non-wake-up state during the active time period of the first DRX cycle, according to the wake-up indication carried in the second energy-saving signal.
(2) The second energy-saving signal is transmitted on demand, indicating wake- up when being transmitted, and indicating non-wake-up when not being transmitted.
The first receiver monitors the second energy-saving signal based on a DRX cycle; if the second energy-saving signal associated with the first DRX cycle is detected, the main transceiver is kept in the wake-up state during the active time period of the first DRX cycle, according to the indication of the second energy-saving signal associated with the first DRX cycle; if the second energy-saving signal associated with the first DRX cycle is not detected, the main transceiver is kept in the non-wake-up state during the active time period of the first DRX cycle.

In a possible design of this embodiment, the second energy-saving signal associated with the first DRX cycle may be transmitted before the active time period of the first DRX cycle, or transmitted at the initial position within the active time period of the first DRX cycle.

In a possible design of this embodiment, the second receiving module 1330 is configured to receive the second energy-saving signal via the main transceiver.

In this case, both the first receiver and the main transceiver are in a non-wake-up state.

In a possible design of this embodiment, the main transceiver monitors the second energy-saving signal based on a DRX cycle; if the second energy-saving signal associated with a first DRX cycle is detected, the main transceiver is kept in a wake-up state or a non-wake-up state during the active time period of the first DRX cycle according to the indication of the second energy-saving signal associated with the first DRX cycle.

The second energy-saving signal is transmitted in any one of the following two ways:
(1) The second energy-saving signal is always transmitted, and each second energy-saving signal carries a wake-up indication or a non-wake-up indication.
   The main transceiver monitors the second energy-saving signal based on a DRX cycle; if the second energy-saving signal associated with the first DRX cycle is detected, the main transceiver is controlled to be in the wake-up state during the active time period of the first DRX cycle, according to the wake-up indication carried by the second energy-saving signal; or the main transceiver is kept in the non-wake-up state during the active time period of the first DRX cycle, according to the non-wake-up indication carried by the second energy-saving signal.
(2) The second energy-saving signal is transmitted on demand, indicating wake-up when being transmitted, and indicating non-wake-up when not being transmitted.

The main transceiver monitors the second energy-saving signal based on a DRX cycle; if the second energy-saving signal associated with the first DRX cycle is detected, the main transceiver is kept in the wake-up state during the active time period of the first DRX cycle, according to the indication of the second energy-saving signal associated with the first DRX cycle; if the second energy-saving signal associated with the first DRX cycle is not detected, the main transceiver is kept in the non-wake-up state during the active time period of the first DRX cycle.

In a possible design of this embodiment, the second energy-saving signal associated with the first DRX cycle may be transmitted before the active time period of the first DRX cycle, or transmitted at the initial position within the active time period of the first DRX cycle.

In a possible design of this embodiment, keeping the main transceiver in the wake-up state during the active time period of the first DRX cycle may be equivalently understood as: monitoring the transmission of downlink data or data frames through the main transceiver throughout the active time period of the first DRX cycle; or equivalently understood as: monitoring the control channel used for scheduling uplink data, downlink data, or data frames through the main transceiver throughout the active time period of the first DRX cycle. The above three expressions have the same meaning in the embodiments of the present disclosure.

Keeping the main transceiver in the non-wake-up state during the active time period of the first DRX cycle may be equivalently understood as: the main transceiver does not monitor the transmission of downlink data or data frames throughout the active time period of the first DRX cycle; or equivalently understood as: the main transceiver does not monitor the control channel used for scheduling uplink data, downlink data, or data frames throughout the active time period of the first DRX cycle. The above three expressions have the same meaning in the embodiments of the present disclosure.

A DRX cycle includes an "On Duration" and an "Opportunity for DRX". During the On Duration (active time period), the electronic device is in the wake-up state for receiving data; during the Opportunity for DRX, the electronic device is in the sleep state where no data is received.

For example, the electronic device monitors the second energy-saving signal based on a DRX cycle, and detects the second energy-saving signal before the active time period of the first DRX cycle, where the second energy-saving signal indicates that the main transceiver is to be in the wake-up state. Then, the main transceiver is kept in the wake-up state during the active time period of the first DRX cycle.

In a possible design of this embodiment, the electronic device includes an energy harvesting module configured to harvest ambient energy from the environment, and the ambient energy is used to power the first receiver.

In this embodiment, the second receiving module 1330 may be divided into multiple receiving sub-modules, such as a first receiving sub-module and a second receiving sub-module. The first receiving sub-module may be configured to receive the second energy-saving signal via the first receiver, and the second receiving sub-module may be configured to receive the second energy-saving signal via the main transceiver; alternatively, the first receiving sub-module may be configured to receive the second energy-saving signal via the main transceiver, and the second receiving sub-module may be configured to receive the second energy-saving signal via the first receiver. The functions of different receiving sub-modules are not limited in this embodiment.

This embodiment uses a single second receiving module 1330 as an example for illustration, and the number of second receiving modules 1330 is not limited.

For the functional description of the first receiving module 1310, refer to the content of operation 810 in the embodiment shown in FIG. 8.

For the functional description of the communication module 1320, refer to the content of operation 830 in the embodiment shown in FIG. 10.

For the functional description of the second receiving module 1330, refer to the content of operation 820 in the embodiment shown in FIG. 10.

FIG. 14 is a block diagram of a network apparatus according to an exemplary embodiment of the present disclosure. The apparatus may be implemented as a network device or a part of a network device through software, hardware, or a combination of both. The apparatus includes a first transmitting module 1410 and a second transmitting module 1420.

The first transmitting module 1410 is configured to transmit first information to a first receiver.

The electronic device includes the first receiver and a main transceiver, where an operating power consumption of the first receiver is lower than that of the main transceiver, and the first information is used for communication between the electronic device and a wireless network. The wireless network includes at least one of a WiFi network, a cellular network, or a wireless energy supply network.

In a possible design of this embodiment, the first transmitting module 1410 is configured to transmit the first information to the first receiver when the first receiver is in a wake-up state.

In a possible design of this embodiment, being in a wake-up state includes at least one of the following:
being always in a wake-up state;
being in a wake-up state periodically; or
entering a wake-up state after receiving a first energy-saving signal.

The first energy-saving signal is used to indicate whether to wake up the first receiver. This design uses the scenario where the first receiver is always in a wake-up state as an example for illustration.

In a possible design of this embodiment, the first information includes: information used for communication between the first receiver and the wireless network.

In a possible design of this embodiment, the electronic device is an active device, which refers to a device with its own power supply and the capability of actively generating and transmitting signals, such as a mobile phone, a computer, a smart watch, a smart band, etc.

In a possible design of this embodiment, the electronic device is a passive device, which refers to a device that does not require a power supply or can operate by receiving energy from other devices, and may be referred to as a zero-power-consumption device, a low-power-consumption device, etc. The zero-power-consumption device may be implemented as at least one of a zero-power-consumption device or a zero-power-consumption terminal, or a part of at least one of a zero-power-consumption device or a zero-power-consumption terminal. The low-power-consumption device may be implemented as at least one of a low-power-consumption device or a low-power-consumption terminal, or a part of at least one of a low-power-consumption device or a low-power-consumption terminal.

In a possible design of this embodiment, the electronic device obtains energy from the environment and may be referred to as an ambient energy IoT device.

In a possible design of this embodiment, the electronic device is deployed at a fixed location and may be referred to as a zero-power-consumption device, a low-power-consumption device, etc. The zero-power-consumption device may be implemented as a zero-power-consumption station or a part of a zero-power-consumption station. The low-power-consumption device may be implemented as a low-power-consumption station or a part of a low-power-consumption station.

In a possible design of this embodiment, in a case that the first receiver is in a wake-up state, a network device or the energy supply node 630 in the embodiment shown in FIG. 6 transmits the first information to the first receiver. The first information may be referred to as auxiliary information, which helps the electronic device quickly establish a connection with the wireless network and complete communication after waking up the main transceiver.

In a possible design of this embodiment, the first information includes: information used for communication between the main transceiver and the wireless network. Equivalently, the first information may be understood as including information used for communication between the main transceiver (or main air interface communication unit) and the wireless network.

In a possible design of this embodiment, the content related to the first information may be applied when the electronic device is in a Radio Resource Control CONNECTED (RRC CONNECTED) state, or after the electronic device is associated with a network device.

In a possible design of this embodiment, the first information includes, but is not limited to, at least one of the following:
configuration information for receiving downlink data;
configuration information for receiving downlink control signaling;
configuration information for receiving system broadcast;
configuration information for transmitting uplink data;
configuration information for transmitting uplink control signaling;
synchronization information for synchronization;
configuration information for receiving a second energy-saving signal;
capability information of the wireless network;
configuration information for random access;
information related to a waveform used for communication;
information related to subcarrier spacing used for communication;
operator-related information; or
configuration information of a paging message.

The second energy-saving signal is used to indicate whether to wake up the main transceiver.

In a possible design of this embodiment, the configuration information for receiving downlink data includes at least one of the following: a time-domain position for receiving downlink data, a frequency-domain position for receiving downlink data, a cycle for receiving downlink data, etc.

In a possible design of this embodiment, the configuration information for receiving downlink control signaling includes at least one of the following: a time-domain position for receiving downlink control signaling, a frequency-domain position for receiving downlink control signaling, a control resource set for monitoring downlink control signaling, a search space set for monitoring downlink control signaling, or a Radio-Network Temporary Identifier (RNTI) for monitoring downlink control signaling, etc.

In a possible design of this embodiment, the configuration information for receiving downlink control signaling includes: information indicating PDCCH monitoring.

In a possible design of this embodiment, the information indicating PDCCH monitoring includes at least one of the following:
configuration information of a PDCCH search space set;
configuration information of a PDCCH search space set group; or
PDCCH skipping information.

A PDCCH search space set group includes at least one PDCCH search space set. A PDCCH search space set or a PDCCH search space set group is used to indicate PDCCH monitoring occasions. PDCCH skipping information is used to indicate PDCCH monitoring is not to be performed at one or more specified PDCCH monitoring occasions or within a specified time period.

Regarding PDCCH search space sets and PDCCH search space set groups:
The electronic device is configured with multiple PDCCH search space sets or PDCCH search space set groups. When configured with PDCCH search space set groups, each PDCCH search space set group includes at least one PDCCH search space set. PDCCH search space set group switch is used to indicate a PDCCH search space set or a PDCCH search space set group.

In a possible design of this embodiment, different PDCCH search space sets (or PDCCH search space set groups) correspond to different densities of PDCCH monitoring occasions in the time domain.

For example, when two PDCCH search space set groups are configured, the first PDCCH search space set group corresponds to a sparse density of PDCCH monitoring occasions, and the second PDCCH search space set group corresponds to a dense density of PDCCH monitoring occasions. A sparse density of PDCCH monitoring occasions means that the density is less than a first density threshold, while a dense density means that the density is greater than a second density threshold. The first density threshold and the second density threshold are preset and may be the same or different.

When the electronic device has few communication services, the electronic device can use the first PDCCH search space set group to monitor network scheduling. Since the density of PDCCH monitoring occasions is low, the number of monitoring times is small, which can decrease the power consumption of the electronic device.

When the electronic device has many communication services, the electronic device can use the second PDCCH search space set group to monitor network scheduling. Due to the high density of PDCCH monitoring occasions, the number of monitoring times is large, enabling the electronic device to receive data in a timely manner and achieve fast data transmission.

In a possible design of this embodiment, different indexes of PDCCH search space sets indicate respective PDCCH search space sets, the indexes of the PDCCH search space sets are preconfigured by the network device for the electronic device.

In a possible design of this embodiment, respective PDCCH search space set groups are indicated by different index numbers of PDCCH search space set groups, which are preconfigured by the network device for the electronic device.

Regarding PDCCH skipping information:
In a possible design of this embodiment, the network device needs to provide services to multiple electronic devices simultaneously. When an electronic device monitors the PDCCH based on a PDCCH search space set, there may be PDCCH monitoring occasions during which the network device does not transmit a PDCCH to the electronic device. During these PDCCH monitoring occasions, the network device may be scheduling other electronic devices. To reduce the power consumption of the electronic device, the network device transmits PDCCH skipping information to the electronic device, indicating that the electronic device does not need to monitor the PDCCH at specified PDCCH monitoring occasion(s) or within a specified time period.

In a possible design of this embodiment, the PDCCH skipping information may also be referred to as PDCCH monitoring skipping information or PDCCH monitoring ignoring information.

In a possible design of this embodiment, the configuration information for receiving system broadcast includes at least one of the following: a time-domain position of broadcast frames, a frequency-domain position of broadcast frames, a broadcast cycle of broadcast frames, or etc.

In a possible design of this embodiment, the configuration information for receiving system broadcast includes: information related to one or more system parameters.

In a possible design of this embodiment, the information related to one or more system parameters includes at least one of the following:
configuration information of system bandwidth;
configuration information of subcarrier spacing;
configuration information of access class barring; or
configuration information of cell barring.

In a possible design of this embodiment, the configuration information for transmitting uplink data includes at least one of the following: a time-domain position for transmitting uplink data, a frequency-domain position for transmitting uplink data, a cycle for transmitting uplink data, or etc.

In a possible design of this embodiment, the configuration information for transmitting uplink control signaling includes at least one of the following: a time-domain position for transmitting uplink control signaling, a frequency-domain position for transmitting uplink control signaling, or etc.

In a possible design of this embodiment, the synchronization information for synchronization includes at least one of the following: synchronization information for time-domain synchronization, synchronization information for frequency-domain synchronization, or etc., which helps the first receiver achieve time-frequency synchronization with the wireless network.

In a possible design of this embodiment, the synchronization information includes at least one of the following:
configuration information of a cell identity (ID);
configuration information of a transmission cycle of a synchronization signal;
configuration information of a time-frequency resource position of the synchronization signal;
configuration information of a resource element (RE) density of the synchronization signal;
configuration information of a port of the synchronization signal;
configuration information of a transmission power of the synchronization signal;
Quasi Co-Located (QCL) information of the synchronization signal; or
information indicating one or more available reference signals.

In a possible design of this embodiment, the signal carrying the synchronization information may be at least one of a Primary Synchronization Signal (PSS), a Secondary Synchronization Signal (SSS), a Channel-State Information Reference Signal (CSI-RS), or a Tracking Reference Signal (TRS).

In a possible design of this embodiment, the information indicating one or more available reference signals includes an indication of one or more available reference signals and/or one or more unavailable reference signals. For example, the network device configures multiple reference signals for the electronic device, and uses a bit bitmap in the second energy-saving signal to indicate which of these multiple reference signals are available and/or unavailable. For instance, the bitmap "10010" indicates five reference signals, where "1" indicates that a reference signal is available and "0" indicates that a reference signal is unavailable, i.e., the first and fourth reference signals are available, while the second, third, and fifth reference signals are unavailable; alternatively, "0" indicates that a reference signal is available and "1" indicates that a reference signal is unavailable, i.e., the second, third, and fifth reference signals are available, while the first and fourth reference signals are unavailable.

In a possible design of this embodiment, the information indicating one or more available reference signals includes an indication of the usage duration of the available reference signal(s).

In a possible design of this embodiment, the configuration information for receiving the second energy-saving signal includes at least one of the following: a time-domain position for receiving the second energy-saving signal, or a frequency-domain position for receiving the second energy-saving signal, etc. The second energy-saving signal is used to indicate whether to wake up the main transceiver.

In a possible design of this embodiment, the capability information of the wireless network includes at least one of the following: a code rate supported by the wireless network, a Modulation and Coding Scheme (MCS) supported by the wireless network, or etc. Such information is generally carried in a beacon frame(s).

In a possible design of this embodiment, the configuration information for random access includes: PRACH configuration information.

In a possible design of this embodiment, the PRACH configuration information includes at least one of the following:
configuration information of a time-frequency resource position of a PRACH Occasion (RO);
configuration information of a random access preamble index; or
configuration information of a PRACH configuration index.

In a case that the electronic device is in the Radio Resource Control idle (RRC idle) state or the Radio Resource Control inactive (RRC inactive) state, the electronic device, after being woken up, needs to initiate a random access procedure to establish an RRC connection and communicate with the wireless network. To accelerate the random access procedure, the configuration information for random access includes configuration information of PRACH, such as configuration information of a time-frequency resource position of an RO, configuration information of an RO index, or configuration information of a time interval (RO timing) between RO and the second energy-saving signal; and/or configuration information of a random access preamble index, or configuration information of a random access preamble index set; and/or configuration information of a PRACH configuration index (different PRACH configuration indexes correspond to different PRACH cycles, PRACH slots, starting symbol positions within slots, random access preamble formats, subcarrier spacings, etc.).

In a possible design of this embodiment, the information related to the waveform used for communication includes at least one of the following:
Orthogonal Frequency Division Multiplexing (OFDM);
Discrete Fourier Transform Spread OFDM (DFTS-OFDM); or
Direct Sequence Spread Spectrum (DSSS).

The waveform used for communication is applied to the DownLink (DL) and/or UpLink (UL) of the communication between the main transceiver and the wireless network.

In a possible design of this embodiment, the information related to subcarrier spacing used for communication is applied to the DL and/or UL of the communication between the main transceiver and the wireless network. Examples of subcarrier spacing include 15 KHz, 30 KHz, 60 KHz, 120 KHz, 312.5 KHz, 31.25 KHz, etc.

In a possible design of this embodiment, the operator-related information includes at least one of the following:
Information related to a Public Land Mobile Network (PLMN);
Information related to a Tracking Area ID;
Information related to a Cell-ID; or
Information related to a Base Station System ID (BSS-ID).

In a possible design of this embodiment, the configuration information of a paging message includes at least one of the following:
configuration information of PFs; or
configuration information of POs.

The paging frames and paging occasions are information related to the mechanism for initiating calls or other notifications to the electronic device. A paging frame is a time window used to transmit paging information, while a paging occasion is a specific time point within this time window for performing paging.

It should be noted that the examples of the foregoing information are not intended to limit the first information. The aforementioned first information may have different names or definitions in different wireless networks. For example, system information broadcast configuration information is adopted in the cellular network, and beacon frame broadcast configuration information is adopted in the WiFi network, and so on, which will not be elaborated here.

In a possible design of this embodiment, the form of the aforementioned frequency position includes: channel form, bandwidth form, carrier form, and etc. For example, downlink data is received on a first channel.

In a possible design of this embodiment, the information related to the frequency position enables the electronic device to obtain, via the first receiver, the frequency position for communication between the main transceiver and the wireless network, avoiding the main transceiver from performing frequency scanning to acquire the frequency position after being woken up, thereby reducing power consumption.

In a possible design of this embodiment, the first information is transmitted via one or more data frames; alternatively, the first information is transmitted via one or more beacon frames.

In a possible design of this embodiment, the network device transmits the first information first, followed by the transmission of the second energy-saving signal.

In a possible design of this embodiment, the first information is carried in the second energy-saving signal.

After waking up the first receiver, the network device transmits the second energy-saving signal. By receiving the second energy-saving signal, the electronic device can simultaneously obtain at least one of the first information, information indicating whether to wake up the main transceiver, or synchronization information for synchronization.

In a possible design of this embodiment, the electronic device obtains the configuration of the wireless network based on the content carried in the first information.

For example, in a case that the first information includes configuration information for receiving downlink data, the main transceiver receives downlink data based on information such as the time-domain position for receiving downlink data and the frequency position for receiving downlink data. Before receiving downlink data, the main transceiver can be kept in a non-wake-up state as much as possible, thereby achieving higher power efficiency.

In a case that the first information includes configuration information for receiving downlink control signaling, where the downlink control signaling is used to indicate information related to receiving downlink data, the main transceiver monitors the downlink control signaling based on information such as the time-domain position for receiving downlink control signaling and the frequency position for receiving downlink control signaling, and receives downlink data according to the information related to receiving downlink data indicated by the downlink control signaling, so as to communicate with the wireless network. By receiving the configuration information in advance, the duration during which the main transceiver remains in a non-wake-up state is prolonged, thereby reducing the power consumption of the electronic device.

In a case that the first information includes configuration information for receiving system broadcast, the main transceiver receives system broadcast of the wireless network based on information such as the time-domain position of broadcast frames and the frequency position of broadcast frames. By receiving the configuration information for system broadcast in advance, the main transceiver can be kept in a non-wake-up state during the phases of receiving system broadcast and acquiring configuration information in the system broadcast, thus achieving higher power efficiency.

In a case that the configuration information for receiving system broadcast includes information related to system parameters, the first receiver receives configuration information of at least one of system bandwidth, subcarrier spacing, access class barring, or cell barring in advance. Based on the configuration information for receiving system broadcast, the main transceiver remains in a non-wake-up state during the phases of receiving system broadcast and acquiring configuration information in the system broadcast, thereby achieving higher power efficiency.

In a case that the first information includes configuration information for transmitting uplink data, the main transceiver transmits uplink data based on information such as the time-domain position for transmitting uplink data and the frequency position for transmitting uplink data. Before transmitting uplink data, the main transceiver can be kept in a non-wake-up state as much as possible, thus achieving higher power efficiency.

In a case that the first information includes configuration information for transmitting uplink control signaling, where the uplink control signaling is used to feed back whether downlink data has been received, the main transceiver monitors the uplink control signaling based on information such as the time-domain position for transmitting uplink control signaling and the frequency position for transmitting uplink control signaling. By receiving the configuration information in advance, the duration during which the main transceiver remains in a non-wake-up state is prolonged, thereby reducing the power consumption of the electronic device.

In a case that the first information includes synchronization information for synchronization, the electronic device achieves time-frequency synchronization between the main transceiver and the wireless network based on synchronization information for time-domain synchronization and/or synchronization information for frequency-domain synchronization, thus eliminating the need for the main transceiver to perform time-frequency synchronization again after being woken up.

In a case that the synchronization information for synchronization includes at least one of cell ID, transmission cycle of synchronization signal, time-frequency resource position, RE density, port, transmission power, QCL information, or information indicating one or more available reference signals, the main transceiver achieves time-frequency synchronization with the wireless network according to the above information, thereby avoiding the main transceiver from performing time-frequency synchronization again after being woken up.

In a case that the first information includes configuration information for receiving the second energy-saving signal, the main transceiver monitors or receives the second energy-saving signal based on information such as the time-domain position for receiving the second energy-saving signal and the frequency position for receiving the second energy-saving signal. By receiving the configuration information in advance, the duration during which the main transceiver remains in a non-wake-up state is prolonged, thus reducing the power consumption of the electronic device.

In a case that the first information includes capability information of the wireless network, the main transceiver communicates with the wireless network based on information such as code rates supported by the wireless network and MCS supported by the wireless network, for example, communicating with the wireless network at a code rate of 128 kilobits per second. This eliminates the need for the main transceiver to read other content such as beacon frames to obtain the capability information after being woken up, reducing the power consumption of the electronic device.

In a case that the first information includes PRACH configuration information, the first receiver receives the configuration information, and the main transceiver transmits the random access preamble based on the configuration information after being woken up without the need of receiving the configuration information again, thereby reducing access latency and improving access efficiency.

In a case that the first information includes information related to a waveform used for communication, the first receiver receives the waveform-related information, and the main transceiver, after being woken up, determines the waveform for transmitting and receiving signals based on the information without the need of receiving the waveform-related information again, which prolongs the duration that the main transceiver remains in a non-wake-up state and thus reduces the power consumption of the electronic device.

In a case that the first information includes information related to subcarrier spacing used for communication, the first receiver receives the subcarrier spacing-related information, and the main transceiver, after being woken up, determines the slot duration based on the information without the need of receiving the subcarrier spacing-related information again, which prolongs the duration that the main transceiver remains in a non-wake-up state and thus reduces the power consumption of the electronic device.

In a case that the first information includes operator-related information, the first receiver receives the operator-related information, and the main transceiver, after being woken up, determines the currently used cell and base station system based on information such as cell ID and BSS-ID without the need of receiving the operator-related information again, which prolongs the duration that the main transceiver remains in a non-wake-up state and thus reduces the power consumption of the electronic device.

In a case that the first information includes configuration information of the paging message, the first receiver receives the configuration information of the paging message, and the main transceiver is woken up at the paging occasion according to the configuration information, and after being woken up, performs paging based on the information without the need of receiving the configuration information of the paging message again, which prolongs the duration that the main transceiver remains in a non-wake-up state and thus reduces the power consumption of the electronic device.

After receiving the first information, the electronic device uses the main transceiver to establish a connection or association with the network and then performs communication. The main transceiver adopts a communication protocol (e.g., 802.11b and 802.11n) in the related art, enabling the electronic device to communicate with a network device (e.g., AP) in the related art.

Since the operating power consumption of the first receiver is lower than that of the main transceiver, the first receiver receiving information for communication between the first receiver and the wireless network can reduce the power consumption of the electronic device compared with using the main transceiver to receive the above information.

In a possible design of this embodiment, the first information includes: information used for communication between the first receiver and the wireless network.

In a possible design of this embodiment, the first information includes at least one of the following:
configuration information for receiving downlink data;
configuration information for receiving downlink control signaling;
configuration information for receiving system broadcast;
synchronization information for synchronization;
configuration information for receiving the first energy-saving signal;
configuration information for receiving the second energy-saving signal;
capability information of the wireless network;
configuration information for random access;
operator-related information; or
configuration information of a paging message.

The first energy-saving signal is used to indicate whether to wake up the first receiver; the second energy-saving signal is used to indicate whether to wake up the main transceiver.

In a possible design of this embodiment, the configuration information for receiving downlink data includes at least one of the following: a time-domain position for receiving downlink data, a frequency position for receiving downlink data, a cycle for receiving downlink data, or etc.

In a possible design of this embodiment, the configuration information for receiving downlink control signaling includes at least one of the following: a time-domain position for receiving downlink control signaling, a frequency position for receiving downlink control signaling, control resource set for monitoring downlink control signaling, a search space set for monitoring downlink control signaling, a RNTI for monitoring downlink control signaling, or etc.

In a possible design of this embodiment, the configuration information for receiving downlink control signaling includes: information indicating PDCCH monitoring.

In a possible design of this embodiment, the information indicating PDCCH monitoring includes at least one of the following:
configuration information of a PDCCH search space set;
configuration information of a PDCCH search space set group; or
PDCCH skipping information.

A PDCCH search space set group includes at least one PDCCH search space set. A PDCCH search space set or a PDCCH search space set group is used to indicate PDCCH monitoring occasions. PDCCH skipping information is used to indicate PDCCH monitoring is not to be performed at one or more specified PDCCH monitoring occasions or within a specified time period.

For specific details of PDCCH search space sets, PDCCH search space set groups, and PDCCH skipping information, refer to the above embodiments, which will not be repeated here.

In a possible design of this embodiment, the configuration information for receiving system broadcast includes at least one of the following: a time-domain position of broadcast frames, a frequency position of broadcast frames, a broadcast cycle of broadcast frames, or etc.

In a possible design of this embodiment, the configuration information for receiving system broadcast includes: information related to one or more system parameters.

In a possible design of this embodiment, the information related to one or more system parameters includes at least one of the following:
configuration information of system bandwidth;
configuration information of subcarrier spacing;
configuration information of access class barring; or
configuration information of cell barring.

In a possible design of this embodiment, the synchronization information for synchronization includes at least one of the following: synchronization information for time-domain synchronization, synchronization information for frequency-domain synchronization, etc., which helps the first receiver achieve time-frequency synchronization with the wireless network, so that the main transceiver does not need to perform time-frequency synchronization again after being woken up.

In a possible design of this embodiment, the synchronization information includes at least one of the following:
configuration information of a cell Identifier (ID);
configuration information of a transmission cycle of a synchronization signal;
configuration information of time-frequency resource positions of the synchronization signal;
configuration information of a Resource Element (RE) density of the synchronization signal;
configuration information of a port of the synchronization signal;
configuration information of a transmission power of the synchronization signal;
Quasi Co-Location (QCL) information of the synchronization signal; or
information used to indicate one or more available reference signals.

In a possible design of this embodiment, the signal carrying the synchronization information may be at least one of PSS, SSS, CSI-RS, or TRS.

In a possible design of this embodiment, the information indicating one or more available reference signals includes an indication of one or more available reference signals and/or one or more unavailable reference signals. For example, the network device configures multiple reference signals for the electronic device, and uses a bit bitmap in the second energy-saving signal to indicate which of these multiple reference signals are available and/or unavailable. For instance, the bitmap "10010" indicates five reference signals, where "1" indicates that a reference signal is available and "0" indicates that a reference signal is unavailable, i.e., the first and fourth reference signals are available, while the second, third, and fifth reference signals are unavailable; alternatively, "0" indicates that a reference signal is available and "1" indicates that a reference signal is unavailable, i.e., the second, third, and fifth reference signals are available, while the first and fourth reference signals are unavailable.

In a possible design of this embodiment, the information indicating one or more available reference signals includes an indication of the usage duration of the available reference signal(s).

In a possible design of this embodiment, the configuration information for receiving the first energy-saving signal includes at least one of the following: a time-domain position for receiving the first energy-saving signal, a frequency position for receiving the first energy-saving signal, or etc. The first energy-saving signal is a signal used to indicate whether to wake up the first receiver.

In a possible design of this embodiment, the configuration information for receiving the second energy-saving signal includes at least one of the following: a time-domain position for receiving the second energy-saving signal, a frequency position for receiving the second energy-saving signal, or etc.

In a possible design of this embodiment, the capability information of the wireless network includes at least one of the following: a code rate supported by the wireless network, a MCS supported by the wireless network, or etc. Such information is generally carried in a beacon frame(s), so the main transceiver does not need to read beacon frames after being woken up, which reduces the power consumption of the electronic device.

In a possible design of this embodiment, the configuration information for random access includes: PRACH configuration information.

In a possible design of this embodiment, the PRACH configuration information includes at least one of the following:
configuration information of time-frequency resource positions of ROs;
configuration information of a random access preamble index; or
configuration information of a PRACH configuration index.

For specific details of the PRACH configuration information, refer to the above embodiments, which will not be repeated here.

In a possible design of this embodiment, the operator-related information includes at least one of the following:
information related to a Public Land Mobile Network (PLMN);
information related to a Tracking Area ID;
information related to a Cell ID; or
information related to a Base Station System ID.

In a possible design of this embodiment, the configuration information of a paging message includes at least one of the following:
configuration information of one or more paging frames; or
configuration information of one or more paging occasions.

The paging frame(s) and paging occasion(s) are information related to the mechanism for initiating calls or other notifications to the electronic device. A paging frame is a time window used to transmit paging information, while a paging occasion(s) is(are) a specific time point(s) within this time window for performing paging.

It should be noted that the examples of the foregoing information are not intended to limit the first information. The aforementioned first information may have different names or definitions in different wireless networks. For example, system information broadcast configuration information is adopted in cellular networks, and beacon frame broadcast configuration information is adopted in WiFi networks, and so on, which will not be elaborated here.

In a possible design of this embodiment, the electronic device communicates with the wireless network based on the first information when the main transceiver is in a wake-up state.

In a possible design of this embodiment, the second transmitting module 1420 is configured to transmit the second energy-saving signal, which is used to indicate whether to wake up the main transceiver.

In a possible design of this embodiment, waking up the main transceiver may be equivalently understood as: waking up the main transceiver; or waking up the main air interface communication unit. The above three expressions have the same meaning in the embodiments of the present disclosure. In a possible design of this embodiment, waking up the main transceiver may also be equivalently understood as: monitoring the transmission of downlink data or data frames via the main transceiver; or monitoring the control channel for scheduling uplink data, downlink data, or data frames via the main transceiver. The above three expressions have the same meaning in the embodiments of the present disclosure.

In a possible design of this embodiment, not waking up the main transceiver may be equivalently understood as: keeping the main transceiver in an off state; or keeping the main transceiver in a DRX monitoring state. The above three expressions have the same meaning in the embodiments of the present disclosure.

In a possible design of this embodiment, the second energy-saving signal indicating wake-up differs from the second energy-saving signal indicating non-wake-up in at least one of the following aspects:
different waveforms;
different modulation schemes;
different sequence lengths;
different sequences;
different frequencies used;
different frequency ranges used; or
different values of carried information bits.

For example, the first energy-saving signal has a first sequence or a second sequence, where the first sequence is used to indicate waking up the first receiver, and the second sequence is used to indicate not waking up the first receiver. For instance, the first sequence is Zadoff-Chu sequence 1 for indicating waking up the first receiver, and the second sequence is Zadoff-Chu sequence 2 for indicating not waking up the first receiver, which is not limited in the embodiments of the present disclosure.

Another example is that the first energy-saving signal has a first sequence length or a second sequence length, where the first sequence length is used to indicate waking up the first receiver, and the second sequence length is used to indicate not waking up the first receiver. For instance, the first sequence length is 16 bits for indicating waking up the first receiver, and the second sequence length is 8 bits for indicating not waking up the first receiver; alternatively, the first sequence length is 8 bits for indicating waking up the first receiver, and the second sequence length is 16 bits for indicating not waking up the first receiver, which is not limited in the embodiments of the present disclosure.

In a possible design of this embodiment, the second transmitting module 1420 is configured to transmit the second energy-saving signal to the first receiver after the first receiver is woken up.

The first receiver, when woken up, receives the second energy-saving signal, demodulates the second energy-saving signal, and transmits the corresponding content to the main transceiver to indicate whether to wake up the main transceiver.

In a possible design of this embodiment, after the first receiver is woken up may be equivalently understood as: after the first receiver enters a state of monitoring the transmission of downlink data or data frames; or after the first receiver enters a state of monitoring the control channel for scheduling uplink data, downlink data, or data frames. The above three expressions have the same meaning in the embodiments of the present disclosure.

In a possible design of this embodiment, the first receiver monitors the second energy-saving signal based on a DRX cycle; if the second energy-saving signal associated with a first DRX cycle is detected, the main transceiver is kept in a wake-up state or a non-wake-up state during the active time period of the first DRX cycle according to the indication of the second energy-saving signal associated with the first DRX cycle.

The second energy-saving signal is transmitted in any one of the following two ways:
(1) The second energy-saving signal is always transmitted, and each second energy-saving signal carries a wake-up indication or a non-wake-up indication.
   The first receiver monitors the second energy-saving signal based on a DRX cycle; if the second energy-saving signal associated with the first DRX cycle is detected, the main transceiver is controlled to be in the wake-up state during the active time period of the first DRX cycle, according to the wake-up indication carried in the second energy-saving signal; or the main transceiver is kept in the non-wake-up state during the active time period of the first DRX cycle, according to the wake-up indication carried in the second energy-saving signal.
(2) The second energy-saving signal is transmitted on demand, indicating wake-up when being transmitted, and indicating non-wake-up when not being transmitted.

The first receiver monitors the second energy-saving signal based on a DRX cycle; if the second energy-saving signal associated with the first DRX cycle is detected, the main transceiver is kept in the wake-up state during the active time period of the first DRX cycle, according to the indication of the second energy-saving signal associated with the first DRX cycle; if the second energy-saving signal associated with the first DRX cycle is not detected, the main transceiver is kept in the non-wake-up state during the active time period of the first DRX cycle.

In a possible design of this embodiment, the second energy-saving signal associated with the first DRX cycle may be transmitted before the active time period of the first DRX cycle, or transmitted at the initial position within the active time period of the first DRX cycle.

In a possible design of this embodiment, the second energy-saving signal is a signal received by the electronic device via the main transceiver.

In a possible design of this embodiment, the second energy-saving signal is a signal monitored by the electronic device based on a DRX cycle; if the electronic device detects the second energy-saving signal associated with the first DRX cycle, the electronic device keeps the main transceiver in a wake-up state or a non-wake-up state during the active time period of the first DRX cycle according to the indication of the second energy-saving signal associated with the first DRX cycle.

The second energy-saving signal is transmitted in any one of the following two ways:
(1) The second energy-saving signal is always transmitted, and each second energy-saving signal carries a wake-up indication or a non-wake-up indication.
   The main transceiver monitors the second energy-saving signal based on a DRX cycle; if the second energy-saving signal associated with the first DRX cycle is detected, the main transceiver is controlled to be in the wake-up state during the active time period of the first DRX cycle, according to the wake-up indication carried in the second energy-saving signal; or the main transceiver is kept in the non-wake-up state during the active time period of the first DRX cycle, according to the wake-up indication carried in the second energy-saving signal.
(2) The second energy-saving signal is transmitted on demand, indicating wake-up when being transmitted, and indicating non-wake-up when not being transmitted.

The main transceiver monitors the second energy-saving signal based on a DRX cycle; if the second energy-saving signal associated with the first DRX cycle is detected, the main transceiver is kept in the wake-up state during the active time period of the first DRX cycle, according to the indication of the second energy-saving signal associated with the first DRX cycle; if the second energy-saving signal associated with the first DRX cycle is not detected, the main transceiver is kept in the non-wake-up state during the active time period of the first DRX cycle.

In a possible design of this embodiment, the second energy-saving signal associated with the first DRX cycle may be transmitted before the active time period of the first DRX cycle, or transmitted at the initial position within the active time period of the first DRX cycle.

In a possible design of this embodiment, keeping the main transceiver in the wake-up state during the active time period of the first DRX cycle may be equivalently understood as: monitoring the transmission of downlink data or data frames through the main transceiver throughout the active time period of the first DRX cycle; or equivalently understood as: monitoring the control channel used for scheduling uplink data, downlink data, or data frames through the main transceiver throughout the active time period of the first DRX cycle. The above three expressions have the same meaning in the embodiments of the present disclosure.

Keeping the main transceiver in the non-wake-up state during the active time period of the first DRX cycle may be equivalently understood as: the main transceiver does not monitor the transmission of downlink data or data frames throughout the active time period of the first DRX cycle; or equivalently understood as: the main transceiver does not monitor the control channel used for scheduling uplink data, downlink data, or data frames throughout the active time period of the first DRX cycle. The above three expressions have the same meaning in the embodiments of the present disclosure.

A DRX cycle includes an "On Duration" and an "Opportunity for DRX". During the On Duration (active time period), the electronic device is in the wake-up state for receiving data; during the Opportunity for DRX, the electronic device is in the sleep state where no data is received.

For example, the electronic device monitors the second energy-saving signal based on a DRX cycle, and detects the second energy-saving signal before the active time period of the first DRX cycle, where the second energy-saving signal indicates that the main transceiver is to be in the wake-up state. Then, the main transceiver is kept in the wake-up state during the active time period of the first DRX cycle.

In a possible design of this embodiment, the electronic device includes an energy harvesting module configured to harvest ambient energy from the environment, and the ambient energy is used to power the first receiver.

In this embodiment, for the functional description of the first transmitting module 1410, reference may be made to the content of operation 1110 in the embodiment shown in FIG. 11.

For the functional description of the second transmitting module 1420, reference may be made to the content of operation 1120 in the embodiment shown in FIG. 12.

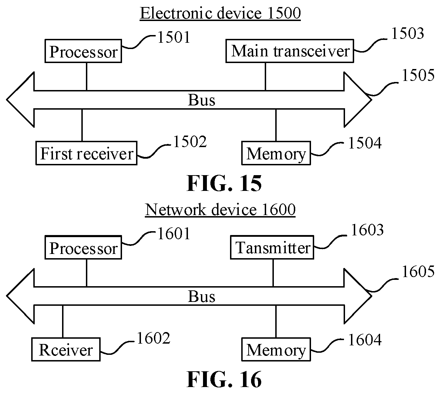

FIG. 15 is a schematic structural diagram of an electronic device 1500 according to an exemplary embodiment of the present disclosure, which includes: a processor 1501, a first receiver 1502, a main transceiver 1503, a memory 1504, and a bus 1505.

The processor 1501 includes one or more processing cores, and the processor 1501 executes various functional applications and information processing by running software programs and modules.

The first receiver 1502 and the main transceiver 1503 may be implemented as a single communication component, which may be a communication chip, and such a communication component may be referred to as a transceiver. In some embodiments, the first receiver 1502 may be configured to implement the functions and steps of at least one of the aforementioned first receiving module 1310, communication module 1320, and second receiving module 1330; the main transceiver 1503 may be configured to implement the functions and steps of at least one of the aforementioned communication module 1320 and second receiving module 1330.

The memory 1504 is connected to the processor 1501 via the bus 1505.

The memory 1504 may be configured to store at least one instruction, and the processor 1501 is configured to execute the at least one instruction to implement the steps in the foregoing method embodiments.

In addition, the memory 1504 may be implemented by any type of volatile or nonvolatile storage device or a combination thereof, including but not limited to: magnetic disks or optical disks, Electrically-Erasable Programmable Read-Only Memory (EEPROM), Erasable Programmable Read-Only Memory (EPROM), Static Random Access Memory (SRAM), Read-Only Memory (ROM), magnetic memory, flash memory, and Programmable Read-Only Memory (PROM).

In some embodiments, the first receiver 1502 independently receives signals/data, or the processor 1501 controls the first receiver 1502 to receive signals/data, or the processor 1501 requests the first receiver 1502 to receive signals/data, or the processor 1501 cooperates with the first receiver 1502 to receive signals/data.

In some embodiments, the main transceiver 1503 independently transmits signals/data, or the processor 1501 controls the main transceiver 1503 to transmit signals/data, or the processor 1501 requests the main transceiver 1503 to transmit signals/data, or the processor 1501 cooperates with the main transceiver 1503 to transmit signals/data.

FIG. 16 is a schematic structural diagram of a network device 1600 according to an exemplary embodiment of the present disclosure, which includes: a processor 1601, a receiver 1602, a transmitter 1603, a memory 1604, and a bus 1605.

The processor 1601 includes one or more processing cores, and the processor 1601 executes various functional applications and information processing by running software programs and modules.

The receiver 1602 and the transmitter 1603 may be implemented as a single communication component, which may be a communication chip, and such a communication component may be referred to as a transceiver. In some embodiments, the transmitter 1603 may be configured to implement the functions and operations of at least one of the aforementioned first transmitting module 1410 and second transmitting module 1420.

The memory 1604 is connected to the processor 1601 via the bus 1605.

The memory 1604 may be configured to store at least one instruction, and the processor 1601 is configured to execute the at least one instruction to implement the steps in the foregoing method embodiments.

In addition, the memory 1604 may be implemented by any type of volatile or nonvolatile storage device or a combination thereof, including but not limited to: magnetic disks or optical disks, EEPROM, EPROM, SRAM, ROM, magnetic memory, flash memory, and PROM.

In some embodiments, the receiver 1602 independently receives signals/data, or the processor 1601 controls the receiver 1602 to receive signals/data, or the processor 1601 requests the receiver 1602 to receive signals/data, or the processor 1601 cooperates with the receiver 1602 to receive signals/data.

In some embodiments, the transmitter 1603 independently transmits signals/data, or the processor 1601 controls the transmitter 1603 to transmit signals/data, or the processor 1601 requests the transmitter 1603 to transmit signals/data, or the processor 1601 cooperates with the transmitter 1603 to transmit signals/data.

In an exemplary embodiment, a computer-readable storage medium is also provided, where at least one program is stored in the computer-readable storage medium, and the at least one program is loaded and executed by a processor to implement the information transmission methods provided in the foregoing method embodiments.

In an exemplary embodiment, a computer program product or a computer program is also provided, where the computer program product or the computer program includes computer instructions stored in a computer-readable storage medium. A processor obtains the computer instructions from the computer-readable storage medium and executes the computer instructions to implement the information transmission methods provided in the foregoing method embodiments.

A person of ordinary skill in the art may understand that all or part of the steps in the foregoing embodiments may be implemented by hardware, or by a program instructing relevant hardware, where the program may be stored in a computer-readable storage medium. The aforementioned storage medium may be a read-only memory, a magnetic disk, an optical disk, or the like.

The above are only optional embodiments of the present disclosure and are not intended to limit the present disclosure. Any modification, equivalent replacement, improvement, etc., made within the spirit and principle of the present disclosure shall fall within the protection scope of the present disclosure.

## Claims

1. An information transmission method, wherein the method is executed by an electronic device, the electronic device comprises a first receiver and a main transceiver, an operating power consumption of the first receiver is lower than an operating power consumption of the main transceiver, and the method comprises:
receiving first information via the first receiver;
wherein the first information is used for communication between the electronic device and a wireless network.

2. The method according to claim 1, wherein the first information comprises: information used for communication between the first receiver and the wireless network.

3. The method according to claim 2, wherein the first information comprises at least one of the following:
configuration information for receiving downlink data;
configuration information for receiving downlink control signaling;
configuration information for receiving system broadcast;
synchronization information for synchronization;
configuration information for receiving a first energy-saving signal;
configuration information for receiving a second energy-saving signal;
capability information of the wireless network;
configuration information for random access;
operator-related information; or
configuration information of a paging message;
wherein the first energy-saving signal is used to indicate whether to wake up the first receiver; and the second energy-saving signal is used to indicate whether to wake up the main transceiver.

4. The method according to claim 1, wherein the first information comprises: information used for communication between the main transceiver and the wireless network.

5. The method according to claim 4, wherein the first information comprises at least one of the following:
configuration information for receiving downlink data;
configuration information for receiving downlink control signaling;
configuration information for receiving system broadcast;
configuration information for transmitting uplink data;
configuration information for transmitting uplink control signaling;
synchronization information for synchronization;
configuration information for receiving a second energy-saving signal;
capability information of the wireless network;
configuration information for random access;
information related to waveform used for communication;
information related to subcarrier spacing used for communication;
operator-related information; or
configuration information of a paging message;
wherein the second energy-saving signal is used to indicate whether to wake up the main transceiver.

6. The method according to claim 3 or 5, wherein the configuration information for receiving downlink control signaling comprises: information indicating Physical Downlink Control Channel (PDCCH) monitoring.

7. The method according to claim 6, wherein the information indicating PDCCH monitoring comprises at least one of the following:
configuration information of a PDCCH search space set;
configuration information of a PDCCH search space set group; or
PDCCH skipping information;
wherein the PDCCH search space set group comprises at least one PDCCH search space set, the PDCCH search space set or the PDCCH search space set group is used to indicate one or more PDCCH monitoring occasions; and the PDCCH skipping information is used to indicate PDCCH monitoring is not to be performed at one or more specified PDCCH monitoring occasions or within a specified time period.

8. The method according to claim 3 or 5, wherein the configuration information for random access comprises: Physical Random Access Channel (PRACH) configuration information.

9. The method according to claim 8, wherein the PRACH configuration information comprises at least one of the following:
configuration information of a time-frequency resource position of a Random Access Occasion (RO);
configuration information of a random access preamble index; or
configuration information of a PRACH configuration index.

10. The method according to claim 3 or 5, wherein the configuration information for receiving system broadcast comprises: information related to one or more system parameters.

11. The method according to claim 10, wherein the information related to one or more system parameters comprises at least one of the following:
configuration information of system bandwidth;
configuration information of subcarrier spacing;
configuration information of access class barring; or
configuration information of cell barring.

12. The method according to claim 3 or 5, wherein the synchronization information for synchronization comprises at least one of the following:
configuration information of a cell Identifier (ID);
configuration information of a transmission cycle of a synchronization signal;
configuration information of time-frequency resource positions of the synchronization signal;
configuration information of a Resource Element (RE) density of the synchronization signal;
configuration information of a port of the synchronization signal;
configuration information of a transmission power of the synchronization signal;
Quasi Co-Location (QCL) information of the synchronization signal; or
information used to indicate one or more available reference signals.

13. The method according to claim 3 or 5, wherein the operator-related information comprises at least one of the following:
information related to a Public Land Mobile Network (PLMN);
information related to a Tracking Area ID;
information related to a Cell ID; or
information related to a Base Station System ID.

14. The method according to claim 3 or 5, wherein the configuration information of a paging message comprises at least one of the following:
configuration information of a Paging Frame (PF); or
configuration information of a Paging Occasion (PO).

15. The method according to any one of claims 1 to 14, wherein
the first information is transmitted via one or more data frames; or
the first information is transmitted via one or more beacon frames.

16. The method according to any one of claims 1 to 15, further comprising:
communicating with the wireless network based on the first information in a case that the main transceiver is in a wake-up state.

17. The method according to claim 16, further comprising:
receiving a second energy-saving signal, wherein the second energy-saving signal is used to indicate whether to wake up the main transceiver.

18. The method according to claim 17, wherein receiving the second energy-saving signal comprises:
receiving the second energy-saving signal via the first receiver after the first receiver is woken up.

19. The method according to claim 17, wherein receiving the second energy-saving signal comprises:
receiving the second energy-saving signal via the main transceiver.

20. The method according to claim 19, wherein receiving the second energy-saving signal comprises:
monitoring the second energy-saving signal based on a Discontinuous Reception (DRX) cycle; if the second energy-saving signal associated with a first DRX cycle is detected, keeping the main transceiver in a wake-up state or a non-wake-up state during an active time period of the first DRX cycle according to an indication of the second energy-saving signal associated with the first DRX cycle.

21. The method according to any one of claims 17 to 20, wherein the first information is carried in the second energy-saving signal.

22. The method according to any one of claims 1 to 21, wherein the electronic device is a passive device.

23. The method according to any one of claims 1 to 21, wherein the electronic device is an active device.

24. The method according to claim 22 or 23, wherein the electronic device comprises an energy harvesting module configured to collect ambient energy from an environment, and the ambient energy is used to supply power to the first receiver.

25. An information transmission method, wherein the method is executed by a network device, and the method comprises:
transmitting first information to a first receiver;
wherein an electronic device comprises the first receiver and a main transceiver, an operating power consumption of the first receiver is lower than an operating power consumption of the main transceiver, and the first information is used for communication between the electronic device and a wireless network.

26. The method according to claim 25, wherein the first information comprises: information used for communication between the first receiver and the wireless network.

27. The method according to claim 26, wherein the first information comprises at least one of the following:
configuration information for receiving downlink data;
configuration information for receiving downlink control signaling;
configuration information for receiving system broadcast;
synchronization information for synchronization;
configuration information for receiving a first energy-saving signal;
configuration information for receiving a second energy-saving signal;
capability information of the wireless network;
configuration information for random access;
operator-related information; or
configuration information of a paging message;
wherein the first energy-saving signal is used to indicate whether to wake up the first receiver; and the second energy-saving signal is used to indicate whether to wake up the main transceiver.

28. The method according to claim 25, wherein the first information comprises: information used for communication between the main transceiver and the wireless network.

29. The method according to claim 28, wherein the first information comprises at least one of the following:
configuration information for receiving downlink data;
configuration information for receiving downlink control signaling;
configuration information for receiving system broadcast;
configuration information for transmitting uplink data;
configuration information for transmitting uplink control signaling;
synchronization information for synchronization;
configuration information for receiving a second energy-saving signal;
capability information of the wireless network;
configuration information for random access;
information related to a waveform used for communication;
information related to subcarrier spacing used for communication;
operator-related information; or
configuration information of a paging message;
wherein the second energy-saving signal is used to indicate whether to wake up the main transceiver.

30. The method according to claim 27 or 29, wherein the configuration information for receiving downlink control signaling comprises: information indicating Physical Downlink Control Channel (PDCCH) monitoring.

31. The method according to claim 30, wherein the information indicating PDCCH monitoring comprises at least one of the following:
configuration information of a PDCCH search space set;
configuration information of a PDCCH search space set group; or
PDCCH skipping information;
wherein the PDCCH search space set group comprises at least one PDCCH search space set, the PDCCH search space set or the PDCCH search space set group is used to indicate PDCCH monitoring occasions; and the PDCCH skipping information is used to indicate PDCCH monitoring is not to be performed at one or more specified PDCCH monitoring occasions or within a specified time period.

32. The method according to claim 27 or 29, wherein the configuration information for random access comprises: Physical Random Access Channel (PRACH) configuration information.

33. The method according to claim 32, wherein the PRACH configuration information comprises at least one of the following:
configuration information of a time-frequency resource position of a Random Access Occasion (RO);
configuration information of a random access preamble index; or
configuration information of a PRACH configuration index.

34. The method according to claim 27 or 29, wherein the configuration information for receiving system broadcast comprises: information related to one or more system parameters.

35. The method according to claim 34, wherein the information related to one or more system parameters comprises at least one of the following:
configuration information of system bandwidth;
configuration information of subcarrier spacing;
configuration information of access class barring; or
configuration information of cell barring.

36. The method according to claim 27 or 29, wherein the synchronization information for synchronization comprises at least one of the following:
configuration information of a cell Identifier (ID);
configuration information of a transmission cycle of a synchronization signal;
configuration information of time-frequency resource positions of the synchronization signal;
configuration information of a Resource Element (RE) density of the synchronization signal;
configuration information of a port of the synchronization signal;
configuration information of a transmission power of the synchronization signal;
Quasi Co-Location (QCL) information of the synchronization signal; or
information used to indicate one or more available reference signals.

37. The method according to claim 27 or 29, wherein the operator-related information comprises at least one of the following:
information related to a Public Land Mobile Network (PLMN);
information related to a Tracking Area ID;
information related to a Cell ID; or
information related to a Base Station System ID.

38. The method according to claim 27 or 29, wherein the configuration information of a paging message comprises at least one of the following:
configuration information of a Paging Frame (PF); or
configuration information of a Paging Occasion (PO).

39. The method according to any one of claims 25 to 38, wherein
the first information is transmitted via one or more data frames; or
the first information is transmitted via one or more beacon frames.

40. The method according to any one of claims 25 to 39, wherein the electronic device communicates with the wireless network based on the first information in a case that the main transceiver is in a wake-up state.

41. The method according to claim 40, further comprising:
transmitting a second energy-saving signal, wherein the second energy-saving signal is used to indicate whether to wake up the main transceiver.

42. The method according to claim 41, wherein the transmitting a second energy-saving signal comprises:
transmitting the second energy-saving signal to the first receiver after the first receiver is woken up.

43. The method according to claim 41, wherein the second energy-saving signal is a signal received by the electronic device via the main transceiver.

44. The method according to claim 43, wherein the second energy-saving signal is a signal monitored by the electronic device based on a Discontinuous Reception (DRX) cycle; if the electronic device detects the second energy-saving signal associated with a first DRX cycle, the electronic device keeps the main transceiver in a wake-up state or a non-wake-up state during an active time period of the first DRX cycle according to an indication of the second energy-saving signal associated with the first DRX cycle.

45. The method according to any one of claims 41 to 44, wherein the first information is carried in the second energy-saving signal.

46. The method according to any one of claims 25 to 44, wherein the electronic device is a passive device.

47. The method according to any one of claims 25 to 44, wherein the electronic device is an active device.

48. The method according to claim 46 or 47, wherein the electronic device comprises an energy harvesting module configured to collect ambient energy from an environment, and the ambient energy is used to supply power to the first receiver.

49. An electronic device, wherein the device comprises a first receiver and a main transceiver, an operating power consumption of the first receiver is lower than an operating power consumption of the main transceiver, and the device comprises:
a first receiving module configured to receive first information via the first receiver;
wherein the first information is used for communication between the electronic device and a wireless network.

50. A network device, comprising:
a first transmitting module configured to transmit first information to a first receiver;
wherein an electronic device comprises the first receiver and a main transceiver, an operating power consumption of the first receiver is lower than an operating power consumption of the main transceiver, and the first information is used for communication between the electronic device and a wireless network.

51. An electronic device, wherein the electronic device comprises:
a processor;
a transceiver connected to the processor;
a memory configured to store executable instructions of the processor;
wherein the processor is configured to load and execute the executable instructions to implement the information transmission method according to any one of claims 1 to 24.

52. A network device, wherein the network device comprises:
a processor;
a transceiver connected to the processor;
a memory configured to store executable instructions of the processor;
wherein the processor is configured to load and execute the executable instructions to implement the information transmission method according to any one of claims 25 to 48.

53. A computer-readable storage medium, wherein at least one program is stored in the computer-readable storage medium, and the at least one program is loaded and executed by a processor to implement the information transmission method according to any one of claims 1 to 24, or the information transmission method according to any one of claims 25 to 48.

54. A computer program product, wherein the computer program product comprises computer instructions stored in a computer-readable storage medium, a processor obtains the computer instructions from the computer-readable storage medium, and the processor executes the computer instructions to implement the information transmission method according to any one of claims 1 to 24, or the information transmission method according to any one of claims 25 to 48.
